# EUROPEAN PATENT APPLICATION

(11) **EP 3 035 186 A1**
(43) Date of publication of application: **22.06.2016**
(21) Application number: 15200432.1
(22) Date of filing: 16.12.2015
(51) Int. Cl.: G06F 3/0488

(54) **OBJECT OPERATION SYSTEM, OBJECT OPERATION CONTROL PROGRAM AND OBJECT OPERATION CONTROL METHOD**

(30) Priority: 17.12.2014 JP 2014254846
(71) Applicant: Konica Minolta, Inc., Tokyo 100-7015 (JP)
(72) Inventor: Takamura, Shunsuke, Tokyo, 100-7015 (JP); Ogino, Shinya, Tokyo, 100-7015 (JP); Takeuchi, Kazuma, Tokyo, 100-7015 (JP); Hoshino, Noriko, Tokyo, 100-7015 (JP); Tsubotani, Ikuko, Tokyo, 100-7015 (JP); Kawabuchi, Yoichi, Tokyo, 100-7015 (JP); Moriwaki, Kagumi, Tokyo, 100-7015 (JP)
(74) Representative: Henkel, Breuer & Partner

(57) **Abstract**

An object operation system which can appropriately recognize multi-touch gestures, an object operation control program and an object operation control method are provided. An object operation system includes a display section, an operation section and a controller. In response to recognizing a multi-touch gesture to touch a screen of the display section at three or more touch points simultaneously on the basis of information output from the operation section, the controller determines an operation target of the multi-touch gesture in accordance with whether or not a predetermined number of touch points among the three or more of touch points are located on one object or the area of an object group displayed on the screen. In response to a change in position of at least one of the predetermined number of touch points, the controller operates the operation target in accordance with the change.

## Description

### TECHNICAL FIELD

The present invention relates to an object operation system, an object operation control program and an object operation control method. Particularly, the present invention relates to an object operation system which supports multi-touch gestures; an object operation control program which causes the system to recognize a multi-touch gesture performed by an operator; and an object operation control method for use in such a system.

### BACKGROUND

In recent years, electronic meetings are popularly held. In an electronic meeting, a display (referred to as a common display) which can be shared by plural users is employed, and users have a discussion while inputting various display items (hereinafter, referred to as objects), such as text, shapes and images, on the common display. In such a common display, plural users can write or draw various objects, make a group of plural objects, move an object or a group of objects to an arbitrary position in the common display, and enlarge or reduce an object in size (hereinafter, also referred to as resizing of an object). Particularly, with an electronic meeting system (object operation system) including a common display equipped with a multi-touch screen, which is a touch screen supporting a multi-touch technology, a user can perform various types of operation on an object or a group of objects displayed in the common display by performing multi-touch gestures.

### DESCRIPTION OF THE RELATED ART

As a technology relating to object operation instructed by multi-touch gestures, for example, Japanese Unexamined Patent Publication (JP-A) No. H11-102274 discloses the following display scrolling device. The display scrolling device includes a touch screen and a controller, so that a user can scroll a display screen by touching a certain position of the touch screen with a user's finger and sliding the finger on the touch screen. The controller recognizes a user's scroll instruction on simultaneously receiving plural touch points on the touch screen, and then scrolls the display screen.

The technology disclosed in JP-A No. H11-102274 was given with the aim of distinguishing a scrolling operation and an object operation both instructed by a user's finger or fingers. On recognizing a touch gesture performed with one finger on the touch screen, the controller determines the touch gesture as an object operation. On recognizing a touch gesture performed by plural fingers on the touch screen, the controller determines the touch gesture as a scrolling operation. In other words, the display scrolling device can perform various kinds of operation on objects on the screen by changing an operation to be performed on an object on the screen in accordance with whether a recognized touch gesture is a single-touch gesture or a multi-touch gesture.

However, in an actual situation that users are working on such a device, users tend to use plural fingers automatically to operate a large-sized object. Therefore, users can sometimes perform erroneous operation in the device. In another situation that plural users operate objects on the screen of the device at the same time, if determining an operation to be performed on an object on the basis of the number of fingers in contact with the screen in total as disclosed in JP-A No. H11-102274, the controller can perform object operation which is different from users' intention.

### SUMMARY

Aspects of the present invention are directed to object operation systems which can appropriately recognize multi-touch gestures, object operation control programs and object operation control methods.

An illustrative object operation system reflecting one aspect of the present invention is an object operation system comprising: a display section which includes a screen and displays an object or objects on the screen; and an operation section which receives a touch gesture performed by an operator on the screen and outputs information according to the touch gesture. The object operation system further comprises a controller which controls the display section and the operation section. In response to recognizing a multi-touch gesture to touch the screen at three or more touch points simultaneously on a basis of the information output from the operation section, the controller determines an operation target of the multi-touch gesture in accordance with whether or not a predetermined number of touch points among the three or more of touch points are located on one object displayed on the screen or an area of an object group composed of objects displayed on the screen, where the predetermined number is two or more. In response to a change in position of at least one of the predetermined number of touch points, the controller operates the operation target in accordance with the change.

An illustrative an object operation control program reflecting one aspect of the present invention is an object operation control program to be executed in a controller which controls a touch screen. The touch screen includes a display section and an operation section, where the display section displays an object or objects on a screen thereof, and the operation section receives a touch gesture performed by an operator on the screen and outputs information according to the touch gesture. The object operation control program, when being executed by a processor of the controller, causes the controller to perform the following processing. The processing comprises, in response to recognizing a multi-touch gesture to touch the screen at three or more touch points simultaneously on a basis of the information output from the operation section, determining an operation target of the multi-touch gesture in accordance with whether or not a predetermined number of touch points among the three or more of touch points are located on one object displayed on the screen or an area of an object group composed of objects displayed on the screen, where the predetermined number is two or more. The processing further comprises, in response to a change in position of at least one of the predetermined number of touch points, operating the operation target in accordance with the change.

An illustrative object operation control method reflecting one aspect of the present invention is an object operation control method for use in a system including a display section, an operation section and a controller which controls the display section and the operation section. The display section displays an object or objects on a screen thereof, and the operation section receiving a touch gesture performed by an operator on the screen and outputting information according to the touch gesture. The method comprises, in response to recognizing a multi-touch gesture to touch the screen at three or more touch points simultaneously on a basis of the information output from the operation section, determining an operation target of the multi-touch gesture in accordance with whether or not a predetermined number of touch points among the three or more of touch points are located on one object displayed on the screen or an area of an object group composed of objects displayed on the screen, where the predetermined number is two or more. The method further comprises, in response to a change in position of at least one of the predetermined number of touch points, operating the operation target in accordance with the change.

According to the illustrative object operation system, object operation control program and object operation control method, the object operation system can recognize operator's multi-touch gestures appropriately, for the following reason.

The object operation system includes a display section which can display an object or objects on its screen and an operation section which receives a touch gesture performed by an operator, wherein the display section and the operation section form a touch screen. The object operation system further includes a controller which controls the touch screen to perform the following processing. In response to recognizing a multi-touch gesture performed by a user to touch the screen at three or more touch points simultaneously, the controller determines an operation target of the multi-touch gesture in accordance with whether or not a predetermined number of touch points among the three or more of touch points of the multi-touch gesture are located on one object or the area of an object group displayed on the screen. Then, the controller performs an operation on the determined operation target in accordance with a change in position of at least one of the predetermined number of touch points of the touch gesture.

Other features of illustrative embodiments will be described below.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, and wherein:
FIG. 1 is a schematic diagram illustrating an example of the external structure of an object operation system of Example 1;
FIG. 2 is a schematic diagram illustrating another example of the external structure of an object operation system of Example 1;
FIGs. 3A to 3C are block diagrams illustrating examples of the structure of an object operation system of Example 1;
FIG. 4 is a schematic diagram illustrating an example of an imaging section of the object operation system of Example 1;
FIG. 5 is a schematic diagram illustrating another example of an imaging section of the object operation system of Example 1;
FIG. 6 is a flowchart illustrating an example of the operation of the object operation system of Example 1;
FIG. 7 is a diagram illustrating an example of a way to form a touch point group in Example 1;
FIG. 8 is a diagram illustrating an example of a process of detecting a touch point group in Example 1;
Each of FIG. 9A and FIG. 9B is a diagram illustrating an example of a way to form a touch point group in Example 1;
FIGs. 10A to 10F are diagrams for illustrating examples of an object operation instructed by a multi-touch gesture in Example 1;
FIGs. 11A to 11D are diagrams for illustrating another set of examples of an object operation instructed by a multi-touch gesture in Example 1;
FIGs. 12A to 12D are diagrams for illustrating another set of examples of an object operation instructed by a multi-touch gesture in Example 1;
FIGs. 13A to 13F are diagrams for illustrating another set of examples of an object operation instructed by a multi-touch gesture in Example 1;
FIG. 14 is a flowchart illustrating an example of the operation of an object operation system of Example 2;
FIGs. 15A to 15F are diagrams for illustrating examples of an object operation instructed by a multi-touch gesture in Example 2;
FIGs. 16A to 16F are diagrams for illustrating another set of examples of an object operation instructed by a multi-touch gesture in Example 2;
FIGs. 17A to 17F are diagrams for illustrating another set of examples of an object operation instructed by a multi-touch gesture in Example 2;
FIGs. 18A to 18H are diagrams for illustrating other examples of an object operation instructed by a multi-touch gesture in Example 2;
FIG. 19 is a flowchart illustrating an example of the operation of an object operation system of Example 3; and
FIGs. 20A to 20F are diagrams for illustrating examples of an object operation instructed by a multi-touch gesture in Example 3.

### DESCRIPTION OF THE PREFERRED EMBODIMENTS

Hereinafter, an embodiment of the present invention will be described with reference to the drawings. However, the scope of the invention is not limited to the illustrated examples.

As described above, in an electronic meeting using a common display which allows users to operate objects, such as text, shapes and images, displayed on the common display, or groups of the objects, users perform various types of operation on the objects and the object groups. For example, a user may move an object or an object group, or may resize an object or an object group, on the common display. Particularly, on an electronic meeting system (object operation system) including a common display equipped with a multi-touch screen, a user can perform various types of operation on an object or an object group displayed on the common display by performing multi-touch gestures.

In an actual situation that users are working on such a system, users tend to use plural fingers automatically to operate a large-sized object. Therefore, users can sometimes perform erroneous operation in the system. In another situation that plural users operate objects on the screen at the same time, if determining an operation to be performed on an object on the basis of the number of fingers in contact with the screen in total as disclosed in JP-A No. H11-102274, the controller of the system can perform object operation which is different from users' intention.

In view of that, there is provided an illustrative object operation system as an embodiment reflecting one aspect of the present invention. The system includes a controller, a display section which can display objects on its screen and an operation section which receives an operator's touch gesture performed on the screen. The controller of the system determines an operation target of an operator's multi-touch gesture to touch the screen at three or more touch points, in accordance with whether or not a predetermined number of touch points among the three or more of touch points of the multi-touch gesture are located on one object or the area of an object group on the screen. If a predetermined number of touch points are located on one object or the area of an object group on the screen, the controller operates the object or the object group determined as an operation target in accordance with a change in position of the touch points of the multi-touch gesture (in concrete terms, a change in position of at least one of the predetermined number of touch points among the touch points of the multi-touch gesture). Thereby, the system can perform appropriate object operation as intended by an operator.

Optionally, the controller may form a touch point group or touch point groups each composed of one or more touch points located within a certain area on the screen, and perform the above-described determination of an operation target for each touch point group. In other words, on recognizing plural touch points on the screen, the controller may divide the screen into certain areas to be used for determining the number of fingers in contact with the screen, and form a touch point group or touch point groups according to the positions of the plural fingers on the screen. Then, the controller may determine an operation target of each touch point group in accordance with whether or not a certain of touch points are located on one object or the area of an object group on the screen. Thereby, the system can appropriately accept plural gestures performed in parallel on the screen and allows plural operators to operate objects on the same screen at the same time.

Optionally, before operating the operation target, the controller may control the display section to display the determined operation target with emphasized on the screen so that an operator can recognize the operation target. Such control can avoid a conflict between plural operations instructed by operators' gestures performed in parallel on the screen (for example, it can avoid a problem that an operator instructs an operation to scroll the whole of the screen while another operator is operating an object on the screen). Further, with the control, the system can prompt a user to correct a gesture if the determined operation target is different from the operator's intention.

### EXAMPLES

### EXAMPLE 1

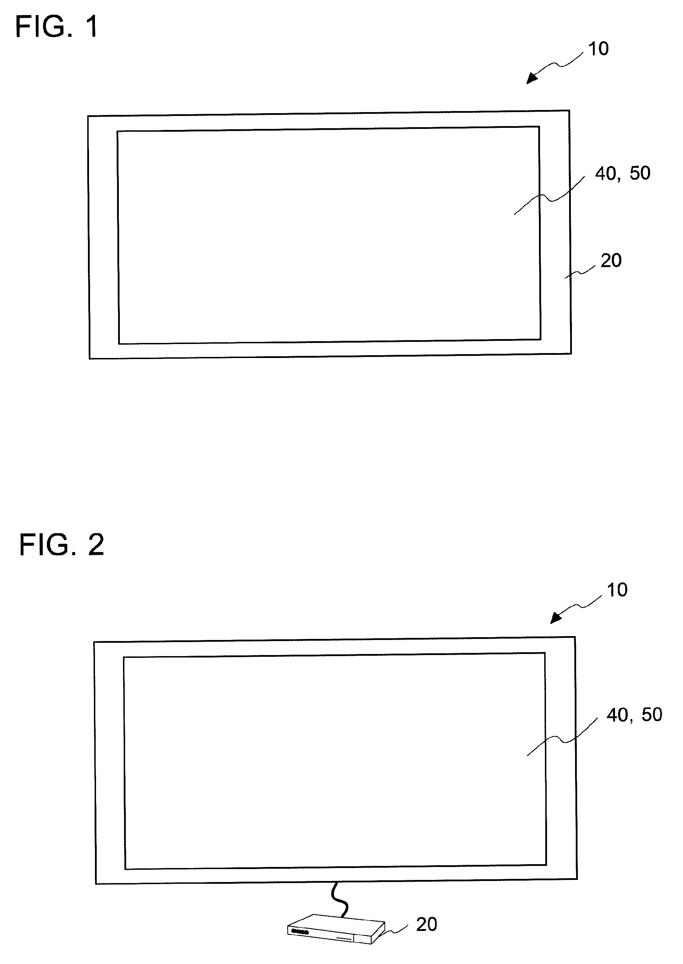

An illustrative object operation system, an object operation control program and object operation control method of Example 1 will be described with reference to FIGs. 1 to 13F so as to describe the above-described embodiments in detail.

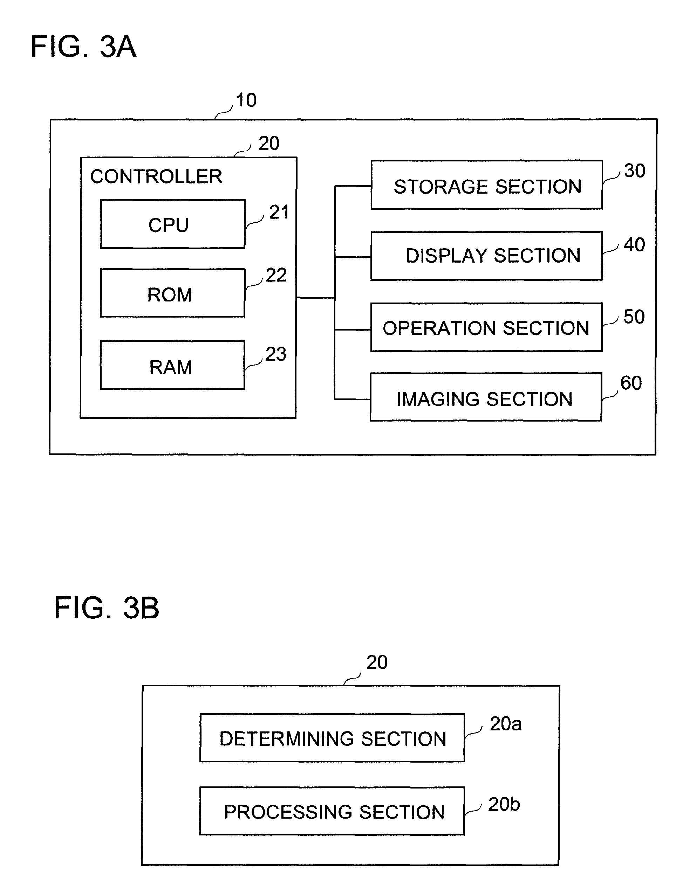

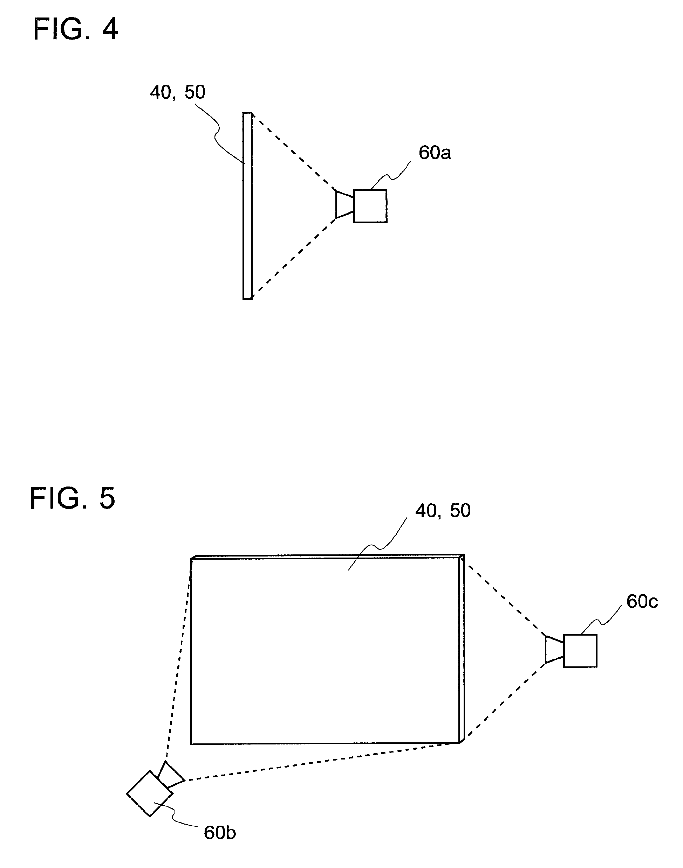

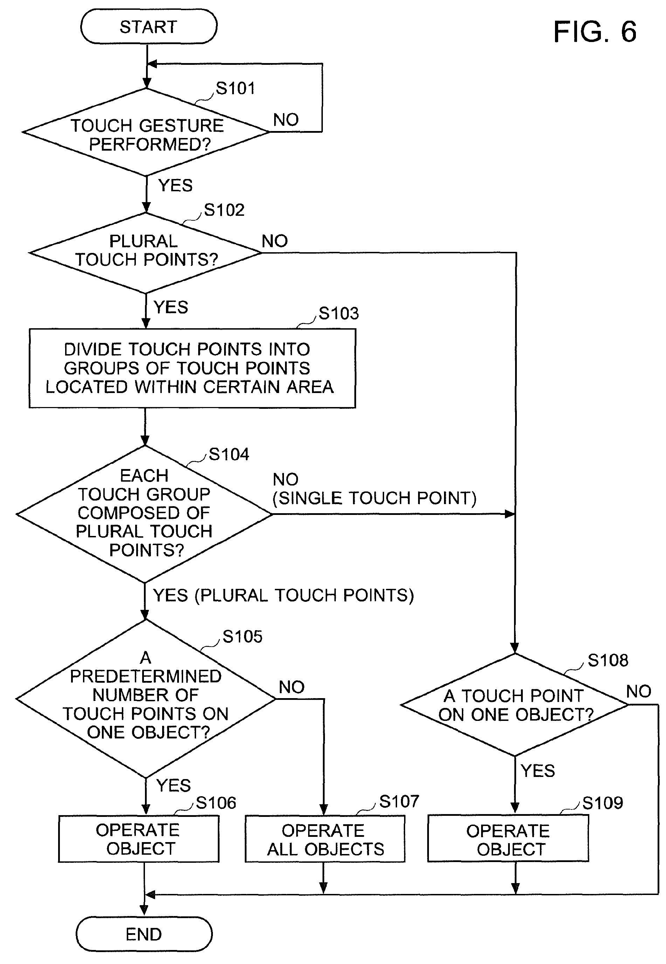

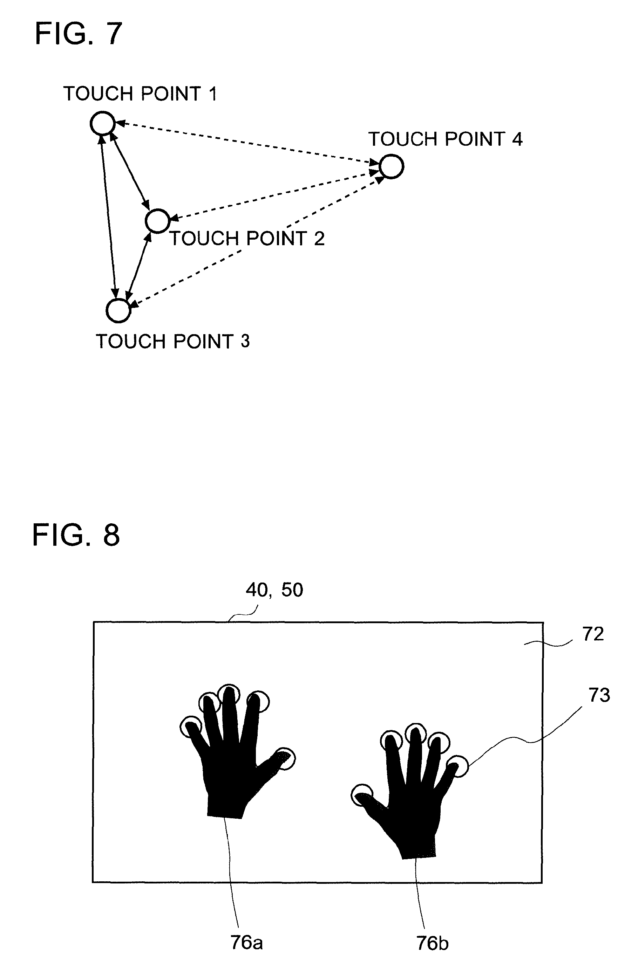

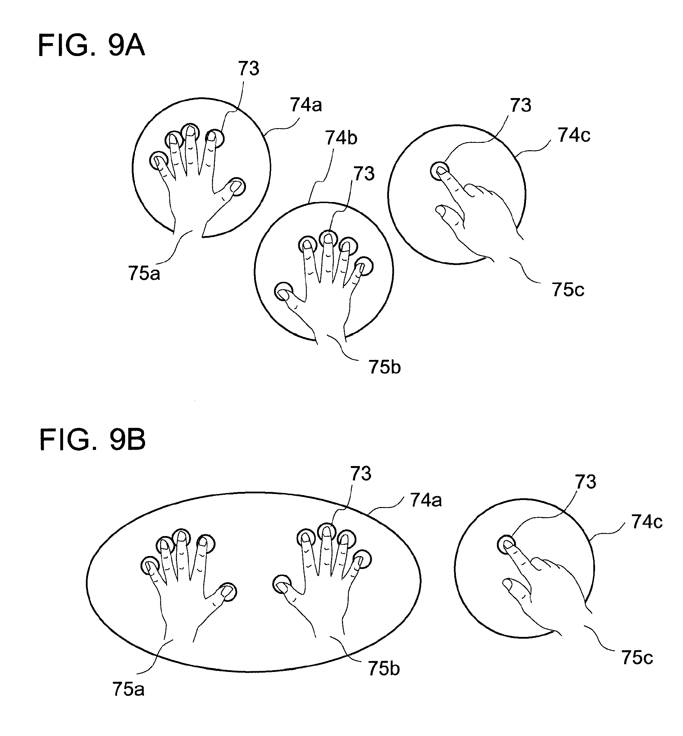

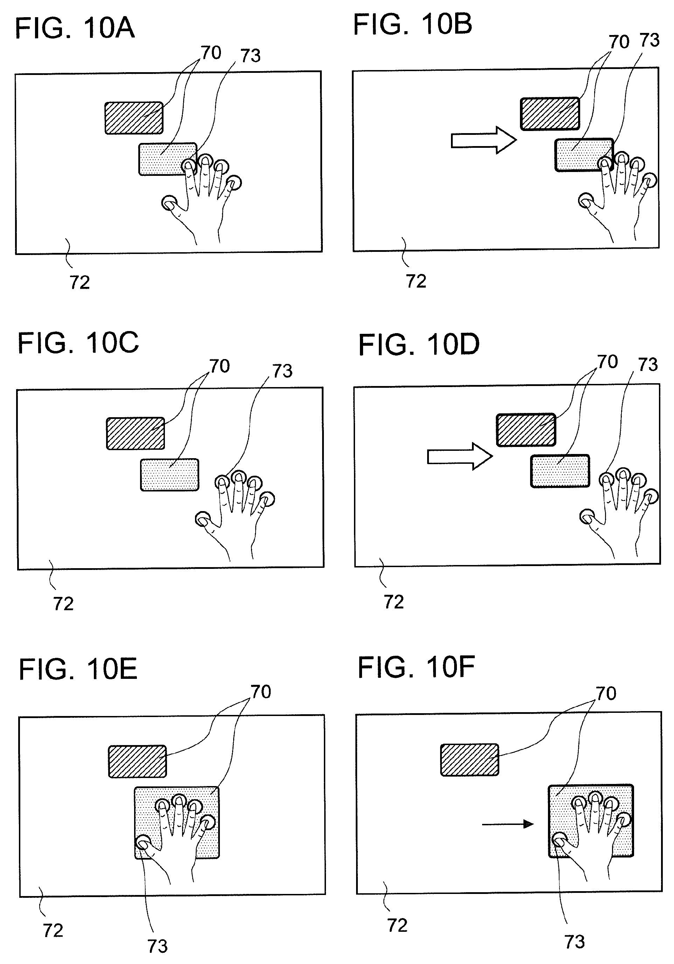

Each of FIG. 1 and FIG. 2 is a schematic diagram illustrating an example of the external structure of an object operation system of Example 1. FIGs. 3A to 3C are block diagrams illustrating examples of the structure of an object operation system of Example 1. Each of FIG. 4 and FIG. 5 is a schematic diagram illustrating an example of an imaging section of the object operation system. FIG. 6 is a flowchart illustrating the operation of the object operation system. FIG. 7 is a diagram illustrating an example of a way to form a touch point group. FIG. 8 is a diagram illustrating an example of a process of detecting a touch point group. Each of FIG. 9A and FIG. 9B is a diagram illustrating an example of a way to form a touch point group. FIGs. 10A to 10F, FIGs. 11A to 11D, FIGs. 12A to 12D and FIGs. 13A to 13F are diagrams for illustrating examples of an object operation instructed by a multi-touch gesture.

The present example can be applied to both of a system used by one operator and a system used by are plural operators. The following description is given to a system including a common working area which allows operations of plural users, for an explanation purpose. The two possible basic structures of the object operation system can be considered as follows. The first is, as illustrated in FIG. 1, object operation system 10 including an apparatus which is equipped with a touch screen and controller 20 which are provided as one body. The touch screen includes display section 40 which displays objects on a screen and operation section 50 which receives an operator's touch gesture performed on the screen. The controller 20 controls the touch screen (the display section 40 and the operation section 50). The second is, as illustrated in FIG. 2, object operation system 10 including a touch screen and controller 20 which are provided as separated bodies. The touch screen includes display section 40 and operation section 50. The touch screen and controller 20 are communicable by using wired or wireless communications, and the controller 20 controls the touch screen (the display section 40 and the operation section 50). The following description is given on the basis of the first structure illustrated in FIG. 1, for the purpose of making the description simple. Further, the object operation system 10 further includes an imaging section 60 which senses the state of an operator's touch gesture (for example, takes an image of operator's hand or hands performing a touch gesture), and a detailed description about the imaging section 60 will be given later with reference to FIGs. 4 and 5.

Object operation system 10 of Example 1 includes controller 20, storage section 30, display section 40, operation section 50 and imaging section 60, as illustrated in FIG. 3A. For example, a device such as a display panel with computing function and an electronic blackboard (or whiteboard) may be the object operation system 10.

Controller 20 includes CPU (Central Processing Unit) 21 and storages including ROM (Read Only Memory) 22 and RAM (Random Access Memory) 23. CPU 21 reads control programs from ROM 22 or storage section 30, loads the control programs onto RAM 23, and executes the control programs, thereby performing the whole control of the object operation system 10. As illustrated in FIG. 3B, control section 20 also works as determining section 20a and processing section 20b.

On the basis of information (information about touch points) obtained from operation section 50, determining section 20a determines whether an operator has performed a gesture to touch the screen at one touch point (a single-touch gesture) or a gesture to touch the screen at plural touch points (a multi-touch gesture). On recognizing a multi-touch gesture, determining section 20a compares positions of the touch points with the display position of each object on the screen. If a predetermined number of touch points among the plural touch points of the multi-touch gesture (for example, all the touch points or more than half of the touch points of the multi-touch gesture) are located on one object displayed on the screen, determining section 20a determines the object as an operation target. If the object operation system supports a certain object operation, for example, a pinch in/out operation instructed by a multi-touch gesture with two fingers, and determines an operation target for multi-touch gestures other than the gestures instructing the pinch in-out operation, the determining section 20a may determine whether the recognized multi-touch gesture is a multi-touch gesture to touch the screen at three or more touch points simultaneously, on the basis of information obtained from operation section 50, and on recognizing such a multi-touch gesture, determine an operation target of the multi-touch gesture in accordance with whether or not a predetermined number of touch points among the three or more of touch points are located on one object displayed on the screen, where the predetermined number is two or more.

Optionally, according to the number of touch points located on one object, determining section 20a may further determine the kind of operation to be performed on the object determined as an operation target. After that, determining section 20a sends the determined result (the operation target, and optionally the kind of operation) to processing section 20b.

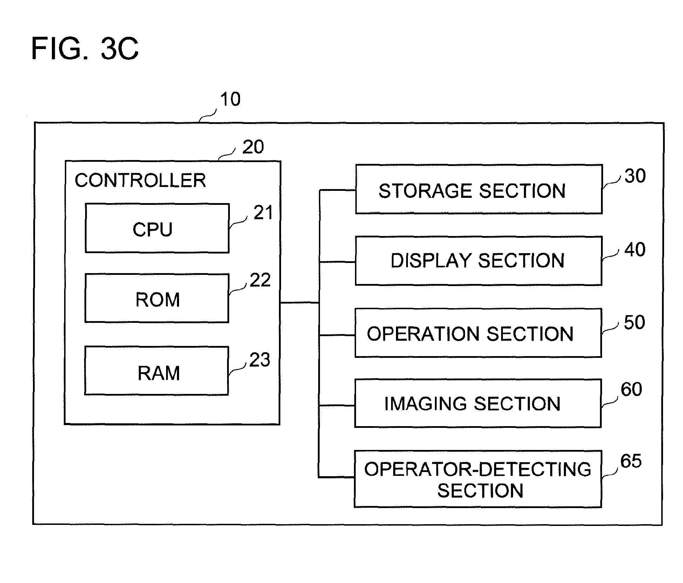

In order to determine an operation target accurately, the determining section 20a may divide plural touch points on the screen to form a touch point group or touch point groups each composed of one or more touch points located within a certain area on the screen, and then perform the above-described determination of an operation target for each touch point group. For example, determining section 20a may form a touch point group or touch point groups each composed of one or more touch points located within a certain area on the screen, on the basis of position information about the touch points obtained from operation section 50. For another example, on the basis of an image prepared by taking an image of hands each performing a touch gesture on the screen with imaging section 60, determining section 20a may determine an operator's hand touching the touch screen for each touch point, and form a touch point group or touch point groups each composed of one or more touch points touched by the same hand. For another example, determining section 20a may form a touch point group or touch point groups by using information about operators prepared in advance. In concrete terms, the determining section 20a prepares dataset of a hand-geometry pattern of each operator in advance, by analyzing a hand image of each operator taken by imaging section 60 or operator-detecting section 65 which will be described later with reference to FIG. 3C, extracting features about the size, shape and wrinkles of an operator's hand from the hand image, and creating and saving a hand-geometry pattern of each operator. On determining an operation target of a touch gesture, the determining section 20a determines an operator touching the screen for each touch points by comparing an image of operators' hands taken by imaging section 60 or operator-detecting section 65 with the patterns previously saved, and then forms a touch point group or touch point groups each composed of one or more touch points touched by the same operator.

The way to determine an operator is not limited to those in the above description, and the determining section 20a may determine an operator by the following ways alternatively. As one example, the way to determine an operator in accordance with information of operators' fingerprints may be employed. That is, the determining section 20a prepares dataset of a finger-print pattern of each operator in advance, by analyzing an image of the rear side of the touch screen taken by imaging section 60 or operator-detecting section 65, extracting operators' fingerprints from the image, and creating and saving a fingerprint pattern of each operator. On determining an operation target of a touch gesture, the determining section 20a determines an operator touching the screen for each touch points by comparing an image of fingerprints taken by imaging section 60 or operator-detecting section 65 with the patterns previously saved, and then forms a touch point group or touch point groups each composed of one or more touch points touched by the same operator. As another example, a way to use human body communication may be employed. That is, object operation system 10 may further include a sensor or detector which can measure an electrical current as operator-detecting section 65, as illustrated in FIG. 3C, to detect a small electrical current passing through a human body (dielectric) which is a communication medium. The determining section 20a can determine an operator performing a touch gesture, on the basis of information obtained from the operator-detecting section 65. Instead of preparing the operator-detecting section 65, the touch screen may serve as the operator-detecting section 65.

Processing section 20b controls display section 40 to display a handwritten object on the screen in accordance with an operator's gesture received through operation section 50; and controls display section 40 to display an object or objects on the screen, after obtaining data of objects from storage section 30. Further, processing section 20b operates an operation target determined by determining section 20a, in accordance with a change in position of touch points (concretely, a change in position of at least one of a predetermined number of touch points located on the object), and controls the display section 40 to change the display state of the object as an operation target. For example, if determining section 20a has determined that an operator has performed a single-touch gesture, the processing section 20b moves the object displayed at the touch point on the screen of the display section 40, in accordance with a change in position of the touch point. If determining section 20a has determined that an operator has performed a multi-touch gesture and further determined one object on the screen as an operation target, the processing section 20b moves or resizes the object in accordance with a change of at least one touch point of the gesture (concretely, a change in position of at least one of a predetermined number of touch points located on the object). If determining section 20a has determined none of objects displayed on the screen of the display section 40 as an operation target, the processing section 20b moves or resizes all the objects displayed on the screen in accordance with a change in position of at least one touch point of the touch gesture.

Optionally, in order to determine the kind of operation to be performed on an operation target accurately, the processing section 20b may determine whether an operator is performing the recognized multi-touch gesture with both hands or a single hand. The way to decide between a multi-touch gesture with single hand and a multi-touch gesture with both hands is not limited particularly, and an arbitrary way may be employed. For example, determining section 20a may prepare and save dataset of a hand-geometry pattern of each multi-touch gesture in advance, by obtaining hand images of various touch gestures each performed by plural fingers of one or both hands of each operator, from imaging section 60, and extracting features about the size, shape and wrinkles of the hands from the images. The determining section 20a may determine whether an operator is performing a multi-touch gesture with one hand or both hands by comparing an image of the operator's multi-touch gesture obtained from imaging section 60 with the patterns previously saved.

For another example, determining section 20a may determine whether an operator is performing a multi-touch gesture with one hand or both hands, on the basis of the size of the touched area and the pressure of each touch point. That is, determining section 20a may prepare and save dataset of patterns of a combination of the sizes of the touched areas and the pressures of touch points of various touch gestures in advance, by obtaining the size of the touched area and the pressure of each touch point of various touch gestures each performed by plural fingers of one or both hands of each operator, from operation section 50. The determining section 20a may determine whether an operator is performing a multi-touch gesture with one hand or both hands by comparing the sizes of the touched areas and the pressures of touch points obtained from operation section 50 with the patterns previously saved. For example, operators tend to perform a two-hand-touch gesture with fingers of the right hand and the same fingers of the left hand, and the sizes of the touch areas and the pressures of the fingers of the right hand tend to be almost the same as those of the left hand. On the other hand, operators tend to perform a single-hand-touch gesture with different fingers of one of the right and left hands, and the sizes of the touch areas and the pressures of the fingers tend to be different from each other. Therefore, by using a combination of the sizes of the touched areas and the pressures of touch points of a touch gesture, determining section 20a can determine whether an operator is performing a multi-touch gesture with one hand or both hands, on the basis of the size of the touched area and the pressure of each touch point. In the object operation system 10 using this way to determine a multi-touch gesture, determining section 20a can determine whether an operator is performing a multi-touch gesture with one hand or both hands, on the basis of information obtained from operation section 50, and imaging section 60 may be omitted from the object operation system 10.

In the preceding descriptions, an operation to resize an object involves an operation to enlarge or reduce an object with the aspect ratio (the ratio of width and height) being kept (in other words, so as to be similar in shape as the original) and an operation to enlarge or reduce an object with the aspect ratio changed (in other words, to modify or change the shape of the object).

The determining section 20a and the processing section 20b may be provided as hardware devices. Alternatively, the determining section 20a and the processing section 20b may be provided by a software (object operation control program) which causes the controller 20 to function as these sections when being executed. That is, the controller 20 may be configured to serve as the determining section 20a and the processing section 20b, when CPU 21 executes an object operation control program.

Storage section 30 includes a component, such as a memory, HDD (Hard Disk Drive) and SSD (Solid State Drive), and stores data such as contents of operator's gestures performed through operation section 50 (for example, information about the position of a touch point and the kind of touch gesture), information about objects displayed on the display of display section 40 (for example, data of objects, ID numbers for identifying objects, and information about objects forming an object group), and patterns to be used in the process of determining whether a multi-touch gesture concerned is a multi-touch gesture with a single hand or a multi-touch gesture with both hands.

Display section 40 includes a display unit such as a LCD (Liquid Crystal Display) and organic EL (Electro-Luminescence) display, and offers a common working area (a screen) which allows plural operators to operate objects thereon.

Operation section 50 includes a device such as a touch sensor and hardware keys, and receives operator's instructions or gestures, where a touch sensor includes electrodes arranged in a lattice shape on display section 40. Operation section 50 is combined with the display section 40 to form a touch screen, and outputs signals according to a touch gesture performed on the touch screen to determining section 20b and processing section 20b.

Imaging section 60 includes an imaging device such as a CCD (Charge Coupled Device) camera. Imaging section 60 can take an image of an operator's hand performing a touch gesture on the screen by using visible rays or infrared rays, and output data of the taken image or processed data of the image (for example, data of contours extracted from the image) to determining section 20a or processing section 20b. Imaging section 60 can have an arbitrary structure and can be arranged at an arbitrary position in object operation system 10 as long as the imaging section 60 can take an image of an operator's hand performing a touch gesture on the touch screen. In object operation system 10 employing a touch screen with light transmittance, as illustrated in FIG. 4, rear camera 60a which is an example of imaging section 60 may be arranged in rear of the touch screen (display section 40 and operation section 50 in FIG. 4) so as to take an image of an operator's hand or hands each performing a touch gesture on the front surface of the touch screen together with the rear surface of the touch screen. Examples of such a system includes Microsoft PixelSense, and MultiTaction displays which are products of MultiTaction (former company name, Multi Touch Oy), where Microsoft and PixelSense are either registered trademarks or trademarks of Microsoft Corporation in the United States and/or other countries, and MultiTaction is either a registered trademark or a trademark of MultiTaction (or former company name, Multi Touch Oy) in the United States and/or other countries. In object operation system 10 employing a touch screen with small light transmittance or an existing touch screen, as illustrated in FIG. 5, front camera 60b or side camera 60c which is another example of imaging section 60 may be arranged in front of or at a side of the touch screen (display section 40 and operation section 50 in FIG. 5) so as to take an image of an operator's hand or hands each performing a touch gesture at the front of the touch screen. These examples of imaging section 60 are arranged in object operation system 10 so as to be separated from the touch panel, but imaging section 60 may be provided as one body together with the touch screen.

As illustrated in FIG. 3C, object operation system 10 of the present example may include operator-detecting section 65 which detects an operator or operators each performing a touch gesture on the touch screen and generates information about the operator, additionally to the structure illustrated in FIG. 3A. For example, operator-detecting section 65 may include an imaging device such as a CCD (Charge Coupled Device) camera, similarly to imaging section 60. The operator-detecting section 65 can take an image of an operator's hand performing a touch gesture on the touch screen by using visible rays or infrared rays, and output data of the taken image or processed data of the image to determining section 20a or processing section 20b. For another example, operator-detecting section 65 may include a sensor or detector which can measure a small electrical current passing through a human body (dielectric) which is a communication medium, so as to detect an operator or operators each performing a touch gesture on the touch screen. The touch screen may serve as operator-detecting section 65, or an additional device may be provided as operator-detecting section 65 in object operation system 10. In the case that operator-detecting section 65 detects an operator by using a similar way as the imaging section 60, object operation system 10 may include the imaging section 60 and the operator-detecting section 65 separately, or may omit the operator-detecting section 65 so that the imaging section 60 also works as an operator-detecting section 65.

Hereinafter, description is given to an object operation control method for use in the object operation system 10 which employs the above-described structure. CPU 21 loads an object operation control program stored in ROM 22 or storage section 30 and executes the object operation control program, to cause the controller 20 to perform processing of the steps shown in the flowchart of FIG. 6. The following description is given under the assumption that plural objects are already displayed on the screen of display section 40 (the touch screen) in advance.

First, controller 20 (determining section 20a) determines whether a touch gesture has been performed on the screen on the basis of signals output from imaging section 60 (S101). When determining that a touch gesture has been performed on the screen (YES of S101), controller 20 (determining section 20a) determines whether the screen has been touched at plural touch points (S102).

If determining that the screen has been touched at plural touch points, controller 20 (determining section 20a) divides the plural touch points into touch point groups each composed of one or more touch points located within a certain area on the screen (S103). Examples of the way to divide the touch points to form touch point groups will be described below.

The first example is described with reference to FIG. 7. In FIG. 7, touch points 1 to 4 are represented by white circles each drawn by a black solid line around it. The first example is a way to form a touch point group composed of touch points located within a predetermined distance from another touch point. In the example of FIG. 7, since the distance of each of the touch points 1 to 3 from another touch point (represented by solid arrows in FIG. 7) is a predetermined threshold or less, the touch points 1 to 3 are formed into one touch point group (touch point group 1). The distance of the touch point 4 from another touch point (represented by dotted arrows in FIG. 7) is greater than the predetermined threshold, and is formed into another touch point group (touch point group 2). FIG. 7 illustrates the positional relationship such that the distance of touch point 4 from each of touch points 1 to 3 exceeds the threshold. In another positional relationship that, for example, the touch point 4 moved above the touch point 1 in the sheet of FIG. 7, the distance of the touch point 4 from the touch point 1 is the same as or less than the threshold, and the distance of the touch point 4 from each of the touch point 2 and the touch point 3 exceeds the threshold, the touch point 4 may belong to touch point group 1 or may belong to another touch point group than the touch point group 1.

The second example is a way to use an image of screen 72 of the touch screen, taken by imaging section 60 located in rear of, at a side of or in front of the touch screen, as illustrated in FIG. 8. In FIG. 8 and succeeding figures, touch points 73 are represented by small circles drawn around operator's fingertips. The second example is a way to analyze the image of screen 72 obtained from imaging section 60, extract shadows of hands 76a and 76b from the image, and then form a touch point group or groups in accordance with the positional relationship of shadows 76a, 76b and touch points 73. With such a way to divide the touch points, as illustrated in FIG. 9A, controller 20 (determining section 20a) can form touch groups 74a, 74b, 74c each composed of touch points 73 located within a certain area around one of operator's hands 75a, 75b, 75c; or as illustrated in FIG. 9B, controller 20 (determining section 20a) can form touch groups 74a, 74b each composed of touch points 73 located within a certain area according to operator (hands 75a, 75b of one operator, and hand 75c of another operator). The way to divide touch points according to operators just by using shadows 76a, 76b of operators' hands can make the controller 20 confuse hands 75a, 75b of one operator and hand 75c of another operator in FIG. 9B. In view of such a case, controller 20 (determining section 20a) may recognize each operator by analyzing an image of the screen of the touch screen taken by imaging section 60 located at a side of or in front of the touch screen, extracting information about the size, shape and wrinkles of each hand from the image, and comparing the information with hand-geometry patterns saved for respective operators in advance. Alternatively, controller 20 (determining section 20a) may recognize each operator by analyzing an image of the rear surface of the touch screen taken by imaging section 60 located in rear of the touch screen, extracting fingerprints from the image, and comparing the fingerprints with fingerprint patterns saved for respective operators in advance, or may recognize each operator by using a human body communication.

Returning to the flowchart of FIG. 6, controller 20 (determining section 20a) determines whether each touch point group is composed of plural touch points (S104). If determining a touch point group is composed of plural touch points, controller 20 (determining section 20a) determines whether or not a predetermined number of touch points in the touch point group are located on one object (S105). If determining a predetermined number of touch points are located on one object, controller 20 (determining section 20a) determines the object as an operation target, and controller 20 (processing section 20b) operates the touched object in accordance with a change of the touch points in position (a change in position of at least one of the predetermined number of touch points) (S106). On the other hand, if a predetermined number of touch points are not located on any of objects on the screen, controller 20 (determining section 20a) determines all objects in the entire screen as operation targets, and controller 20 (processing section 20b) operates all the objects on the screen in accordance with a change in position the touch points (S107).

If the touch screen has been touched at one point in step S102 in the flowchart of FIG. 6 or determining that a touch point group is composed of one touch point in step S104 in the flowchart of FIG. 6, controller 20 (determining section 20a) determines whether the touch point is located on an object (S108). If the touch point is located on an object, controller 20 (processing section 20b) operates the touched object in accordance with a change in position of the touch point (S109). On the other hand, if the touch point is not located on any of the objects on the screen, controller 20 (determining section 20a) determines that the touch gesture has not been performed on an object and controller 20 (processing section 20b) ignores the touch gesture.

In this control, since an operator's gesture with one finger performed in an area including no object on the screen is usually assigned to a certain operation (an operation to select plural objects on the screen, performed by circling the objects with one finger) in the system, the controller 20 does not determine a gesture to drag outside an object or objects on the screen with one finger as an operation on the entire screen (an operation to scroll the screen). Further, though the controller 20 may switch the operation by determining whether an operator is performing a gesture to touch the screen for extended period of time, such a gesture is usually assigned to a certain operation (an operation to form plural objects on the screen into an object group, performed by touching the screen for extended period of time and circling the objects with one finger) in the system. An operation to scroll the screen is instructed by plural touch gestures performed continually, and assigning a gesture to touch the screen for extended period of time to the scrolling operation can significantly deteriorate the operability of the system. Therefore, the controller 20 does not determine a gesture to touch the screen for extended period of time as an operation to scroll the screen.

In this control, while controller 20 (processing section 20b) is operating an object as an operation target, controller 20 (determining section 20a) makes an operation to be performed on an operation target including the object which is now operated (an object group including the object which is now operated) invalid, in other words, does not accept an operation to be performed on an operation target including the object which is now operated. For example, controller 20 (determining section 20a) may ignore an operation to be performed on an operation target including the object which is now operated even in response to a change in position of touch positions located on the object group. In response to recognizing a multi-touch gesture performed on an operation target including the object which is now operated, controller 20 (determining section 20a) may issue a warning that the object is currently operated, or may skip a process to determine the object group including the object which is now operated as an operation target.

Hereinafter, a concrete description is given to the operation of object operation system 10 when a multi-touch gesture is performed on the screen, with reference to FIGs. 10A to 10F, FIGs. 11A to 11D, FIGs. 12A to 12D and FIG. 13A to 13F.

FIGs. 10A to 10F illustrate examples of the operation of object operation system 10, on receiving a dragging operation instructed by an operator's multi-touch gesture with a single hand, where all of the touch points of a touch gesture performed with five fingers of the operator's hand are assumed as a predetermined number of touch points to be used as a criterion for determining an operation target. In these and the following drawings, object 70 determined as an operation target and emphasized on the screen 72 is represented by a figure outlined with a black border around it, and touch points 73 are represented by small circles drawn around operator's fingertips.

FIGs. 10A and 10B illustrate an example of a dragging operation performed by a touch gesture such that a part of touch points 73 of a touch point group (five touch points touched by an operator's right hand) is located on one of objects 70 as illustrated in FIG. 10A and the touch points 73 are moved. Since a predetermined number of touch points are not located on one of objects 70, the controller 20 (determining section 20a) determines all the objects 70 in the screen 72 as operation targets and the controller 20 (processing section 20b) scrolls the screen 72 and moves all the objects 70 in accordance with the moved distance of the touch points (process of S107 in FIG. 6), as illustrated in FIG. 10B. In this process, in order to inform an operator that all the objects 70 have been determined as operation targets, the controller 20 (determining section 20a) may control display section 40 to display the operation targets with emphasized on the screen 72 (for example, by flashing the objects 70 or making the frames of the objects 70 thicker) so that an operator can recognize the operation targets. Displaying the operation targets with emphasized so that an operator can recognize the operation targets can avoid an operator's erroneous operation before it happens.

FIGs. 10C and 10D illustrate another example of the dragging operation. Since any of touch points 73 are not located on objects 70 as illustrated in FIG. 10C, similarly to the operation illustrated in FIG. 10B, the controller 20 (determining section 20a) may determine all the objects 70 in the screen 72 as operation targets and the controller 20 (processing section 20b) may move all the objects 70 in accordance with the moved distance of the touch points, as illustrated in FIG. 10D. Alternatively, the controller 20 (determining section 20a) may ignore the gesture or may perform a predetermined operation (for example, to select all the objects 70 displayed in the screen 72).

FIGs. 10E and 10F illustrate another example of a dragging operation performed by a touch gesture such that all of the touch points 73 of a touch point group are located on one of objects 70 as illustrated in FIG. 10E and the touch points 73 are moved. Since a predetermined number of touch points are located on one of objects 70, the controller 20 (determining section 20a) determines the touched object 70 as an operation target and the controller 20 (processing section 20b) moves the touched object 70 in accordance with the moved distance of the touch points (process of S106 in FIG. 6), as illustrated in FIG. 10F. Similarly to the above-described example, in order to inform an operator that the one of the objects 70 has been determined as an operation target, the controller 20 (determining section 20a) may control display section 40 to display the operation target (the one of the objects 70) with emphasized on the screen 72 (for example, by flashing the object 70 or making the frame of the object 70 thicker) so that an operator can recognize the operation target. Displaying the operation target with emphasized so that an operator can recognize the operation target can avoid an operator's erroneous operation before it happens.

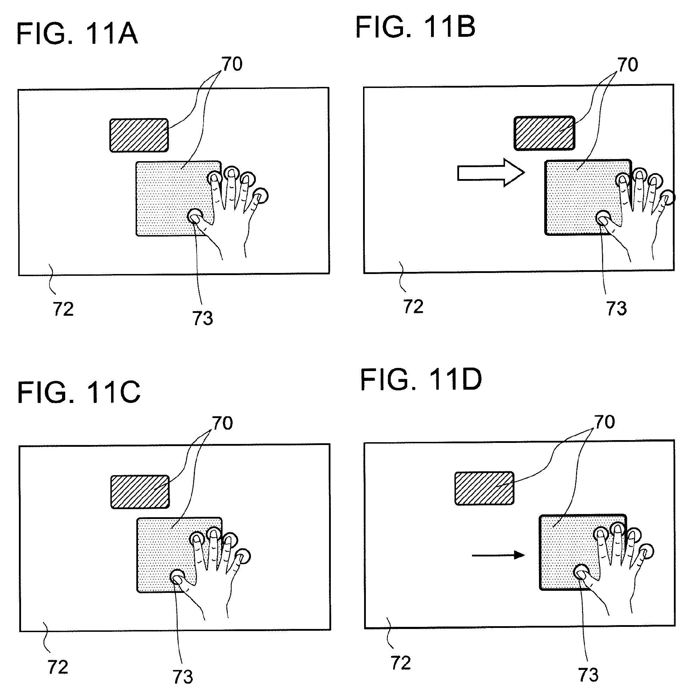

FIGs. 11A to 11D illustrate another set of examples of the operation of object operation system 10, on receiving a dragging operation instructed by an operator's multi-touch gesture with a single hand, where three touch points, which are more than half of five touch points of a touch gesture performed with five fingers of the operator's hand, are assumed as a predetermined number of touch points to be used as a criterion for determining an operation target.

FIGs. 11A and 11B illustrate an example of a dragging operation performed by a touch gesture such that two of touch points 73 of a touch point group (five touch points touched by an operator's right hand) are located on one of objects 70 as illustrated in FIG. 11A and the touch points 73 are moved. Since a predetermined number of touch points are not located on one of objects 70, the controller 20 (determining section 20a) determines all the objects 70 in the screen 72 as operation targets and the controller 20 (processing section 20b) scrolls the screen 72 and moves all the objects 70 in accordance with the moved distance of the touch points (process of S107 in FIG. 6), as illustrated in FIG. 11B.

FIGs. 11C and 11D illustrate another example of a dragging operation performed by a touch gesture such that three of the touch points 73 of the touch point group are located on one of objects 70 as illustrated in FIG. 11C and the touch points 73 are moved. Since a predetermined number of touch points are located on one of objects 70, the controller 20 (determining section 20a) determines the touched object 70 as an operation target and the controller 20 (processing section 20b) moves the touched object 70 in accordance with the moved distance of the touch points (process of S 106 in FIG. 6), as illustrated in FIG. 11D.

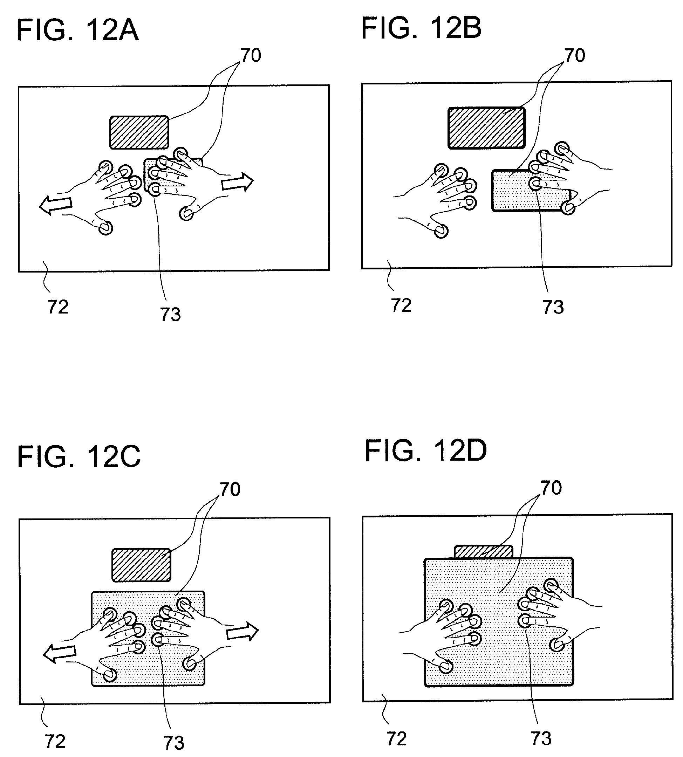

FIGs. 12A to 12D illustrate another set of examples of the operation of object operation system 10, on receiving a resizing operation instructed by an operator's multi-touch gesture with both hands, where all of ten touch points of a touch gesture performed with ten fingers of the operator's hands, are assumed as a predetermined number of touch points to be used as a criterion for determining an operation target.

FIGs. 12A and 12B illustrate an example of a resizing operation performed by a touch gesture such that a part of touch points 73 of a touch point group (ten touch points touched by operator's both hands) is located on one of objects 70 and the distance between touch points 73 of one hand and touch points 73 of the other hand is changed, as illustrated in FIG. 12A. In this and the following examples, descriptions is given to the case of a pinch-out operation. Since a predetermined number of touch points are not located on any of objects 70 in the screen 72, the controller 20 (determining section 20a) determines all the objects 70 in the screen 72 as operation targets and the controller 20 (processing section 20b) resizes (in this and the following examples, enlarges) all the objects 70 in accordance with a change of the distance of the touch points (process of S107 in FIG. 6), as illustrated in FIG. 12B.

FIGs. 12C and 12D illustrate another example of a resizing operation performed by a touch gesture such that all of the touch points 73 of the touch point group are located on one of objects 70 and the distance between touch points 73 of one hand and touch points 73 of the other hand is changed, as illustrated in FIG. 12C. Since a predetermined number of touch points are located on one of objects 70, the controller 20 (determining section 20a) determines the touched object 70 as an operation target and the controller 20 (processing section 20b) resizes the touched object 70 in accordance with a change of the distance of the touch points (process of S106 in FIG. 6), as illustrated in FIG. 12D.

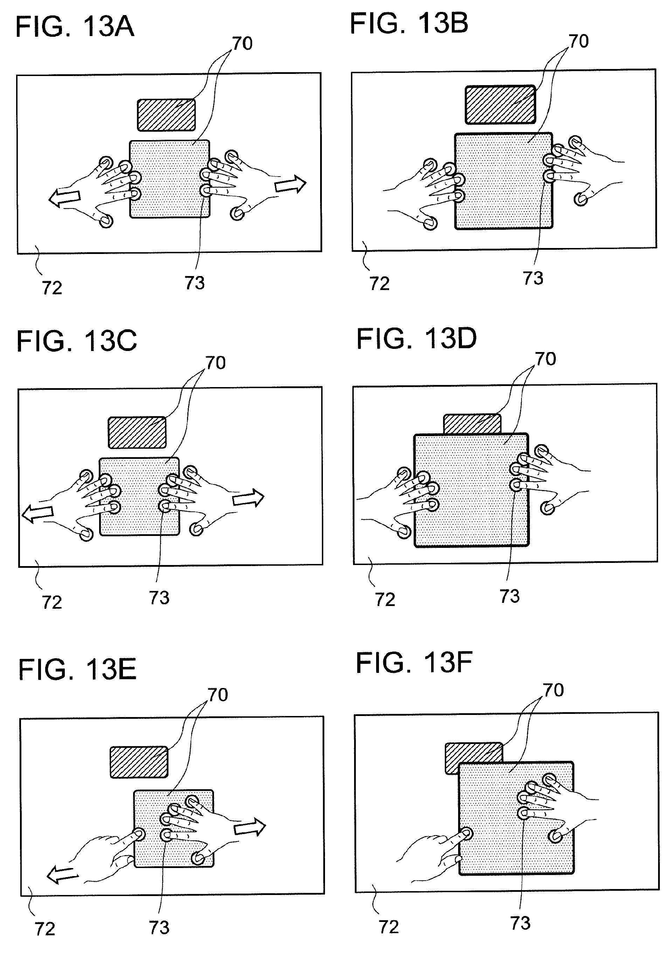

FIGs. 13A to 13F illustrate another set of examples of the operation of object operation system 10, on receiving a resizing operation instructed by an operator's multi-touch gesture with both hands, where six touch points, which are more than half of ten touch points of a touch gesture performed with ten fingers of the operator's hands are assumed as a predetermined number of touch points for use in the process to determine an operation target.

FIGs. 13A and 13B illustrate an example of a resizing operation performed by a touch gesture such that four of touch points 73 of a touch point group (ten touch points touched by operator's hands) is located on one of objects 70 and the distance between touch points 73 of one hand and touch points 73 of the other hand is changed, as illustrated in FIG. 13A. Since a predetermined number of touch points are not located on any of objects 70 in the screen 72, the controller 20 (determining section 20a) determines all the objects 70 in the screen 72 as operation targets and the controller 20 (processing section 20b) resizes all the objects 70 in accordance with a change of the distance of the touch points (process of S107 in FIG. 6), as illustrated in FIG. 13B.

FIGs. 13C and 13D illustrate another example of a resizing operation performed by a touch gesture such that six of the touch points 73 of the touch point group are located on one of objects 70 and the distance between touch points 73 of one hand and touch points 73 of the other hand is changed, as illustrated in FIG. 13C. Since a predetermined number of touch points are located on one of objects 70, the controller 20 (determining section 20a) determines the touched object 70 as an operation target and the controller 20 (processing section 20b) resizes the touched object 70 in accordance with a change of the distance of the touch points (process of S106 in FIG. 6), as illustrated in FIG. 13D.

In the case that a multi-touch gesture is performed with both hands, each of the hands does not need to touch the screen 72 at multiple points. For example, controller 20 may accept the following multi-touch gesture. FIGs. 13E and 13F illustrate a pinch-out operation performed by a touch gesture such that five touch points 73 touched with the right hand and one touch point 73 touched with the left hand are located on one of objects 70 and the distance between touch point 73 of the left hand and touch points 73 of the right hand is changed, as illustrated in FIG. 13E. Since a predetermined number of touch points are located on one of objects 70, the controller 20 (determining section 20a) determines the touched object 70 as an operation target and the controller 20 (processing section 20b) resizes the touched object 70 in accordance with a change of the distance of the touch points (process of S106 in FIG. 6), as illustrated in FIG. 13F.

In the cases of performing a multi-touch gesture with both hands in above examples, each of the hands is moved to change the positions of the touch points. Alternatively, the controller 20 may accept a gesture to fix a touch point or touch points touched with one hand and change in position a touch point or touch points touched with the other hand so as to change the positions of the touch points.

Further, in the above examples, the number of touch points used as a criterion for determining an operation target was three for a multi-touch gesture with a single hand, and was six for a multi-touch gesture with both hands. However, the number of touch points used as a criterion for determining an operation target may be another appropriate number.

Further, in the above examples, when a predetermined number of touch points are not located on any of objects in the screen, controller 20 determines all the objects in the screen as operation targets. Alternatively, in an object operation system which supports a certain operation performed by another multi-touch gesture and needs to determine an operation target in consideration with the certain operation, controller 20 may determine an operation target in accordance with the number of touch points of a touch gesture. For example, in an object operation system which supports a pinch in/out operation performed with two fingers as an operation on an object, the controller 20 (determining section 20a) may determine one object on the screen as an operation target when recognizing a multi-touch gesture to touch the screen 72 at three or more touch points and a predetermined number of touch points are located on the object; and may determine all the objects on the screen as operation targets when recognizing a multi-touch gesture to touch the screen 72 at three or more touch points and a predetermined number of touch points are not located on any of objects on the screen. In other words, in the step of S104 in the flowchart of FIG. 6, if determining that a touch point group is composed of two touch points, controller 20 (determining section 20a) may determine the touched object as an operation target and controller 20 (operation section 20b) may perform an pinch in/out operation on the object; and if determining that a touch point group is composed of three or more touch points, controller 20 (determining section 20a) may determine whether a predetermined number of touch points in the touch point group are located on one object (the process of S105).

In the above examples, controller 20 (determining section 20a) determines the kind of operation to be performed on an operation target in accordance with a change in position of touch points of a multi-touch gesture. Alternatively, controller 20 (determining section 20a) may determine the kind of operation to be performed on an operation target in accordance with the number of touch points of a touch gesture. For example, controller 20 (determining section 20a) may determine the kind of operation as an operation to move an object if recognizing a multi-touch gesture with a single hand and may determine the kind of operation as an operation to resize an object if recognizing a multi-touch gesture with both hands. Alternatively, controller 20 (determining section 20a) may determine the kind of operation to be performed on an operation target in accordance with the number of touch points located on the touched object.

As described above, in response to recognizing a multi-touch gesture, the controller determines an operation target in accordance with whether or not a predetermined number of touch points among touch points of the multi-touch gesture are located on one object. With this control, the object operation system can operate objects appropriately and can provide user-friendly operability.

### EXAMPLE 2

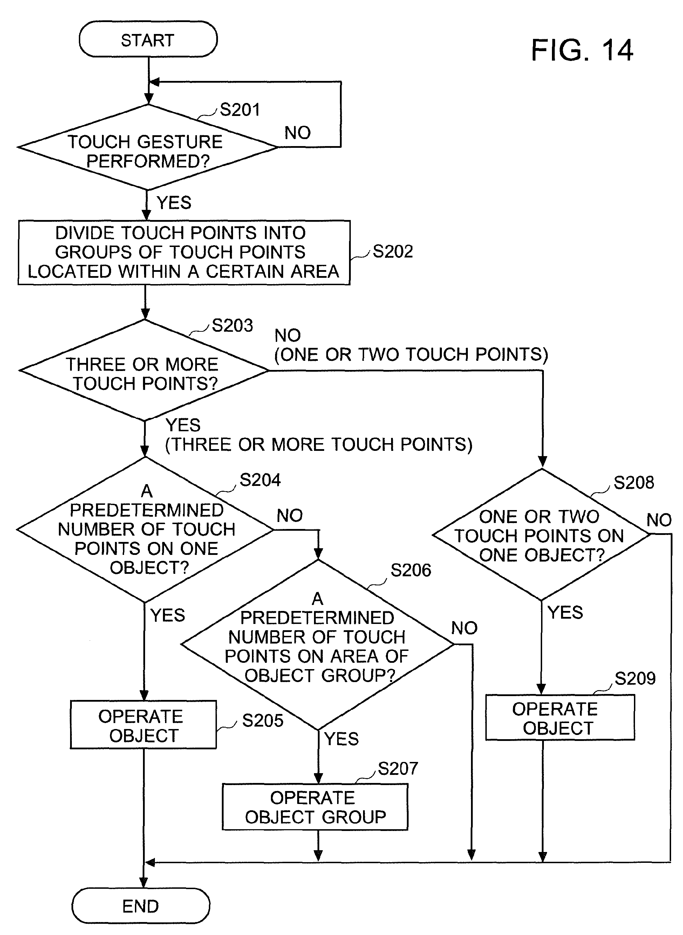

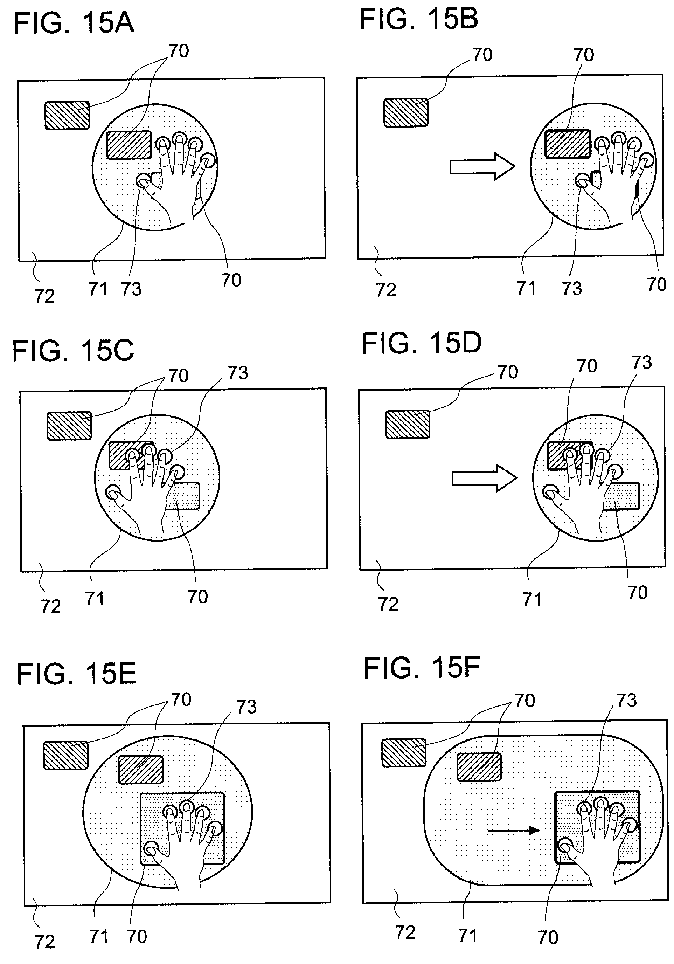

An illustrative object operation system, object operation control program, and object operation control method of Example 2 will be described with reference to FIGs. 14 to 18H so as to describe the above-described embodiments in detail. FIG. 14 is a flowchart illustrating the operation of the object operation system of the present example. FIGs. 15A to 18H are diagrams for illustrating examples of an object operation instructed by a multi-touch gesture in Example 2.

In Example 1, descriptions were given to an object operation system in which a controller determines an operation target in accordance with whether or not a predetermined number of touch points among all the touch points of a multi-touch gesture are located on one object. In the condition that the display section 40 displays an object group composed of plural objects on the screen, the controller can determine an operation target in accordance with whether or not a predetermined number of touch points in a touch gesture is located on one object or the area of an object group. In Example 2, descriptions were given to an object operation system supporting such control. The structure of object operation system 10 in Example 2 is the same as that illustrated in FIG. 1, FIG. 2 and FIGs. 3A to 3C, and the operation of determining section 20a and processing section 20b of controller 20 will be described below.

Determining section 20a determines whether an operator has performed a single-touch gesture or a multi-touch gesture. On recognizing a multi-touch gesture to touch the screen at three or more touch points simultaneously, determining section 20a compares positions of the touch points of the gesture with the display position of each object and the display positon of an object group composed of one or more touch points on the screen. If a predetermined number of touch points among the plural touch points of the multi-touch gesture are located on one object or the area of an object group displayed on the screen, determining section 20a determines the object or the object group as an operation target. Optionally, according to the number of touch points located on one object or the area of an object group, determining section 20a may further determine the kind of operation to be performed on the operation target. After that, determining section 20a sends the determined result (the operation target, and optionally the kind of operation) to processing section 20b.

Processing section 20b operates the operation target determined by determining section 20a in accordance with a change of the touch points in position (concretely, a change in position of at least one of the predetermined number of touch points), and controls the display section 40 to change the display state of the object as an operation target. For example, if determining section 20a has determined that an operator has performed a single-touch gesture or two-point-touch gesture, the processing section 20b moves the object or the object group displayed at the touch point or points on the screen of the display section 40, in accordance with a change in position of the touch point or points. If determining section 20a has determined that an operator has performed a multi-touch gesture to touch the screen at three or more touch points and further determined one object or an object group on the screen as an operation target, the processing section 20b moves or resizes the object or the object group, which is an operation target, in accordance with a change of at least one touch point of the gesture. If determining section 20a has determined none of objects displayed on the screen of the display section 40 as an operation target, the processing section 20b moves or resizes all the objects displayed on the screen in accordance with a change in position of at least one touch point of the gesture.

An object group of the present example is composed of one or plural object which have been registered in advance. Alternatively, an object group may be composed of plural object located within a certain area (for example, objects located within an area the center of which is located an object touched by an operator). Alternatively, an object group may be formed according to kind of objects, or may be formed according to size or color of objects. In object operation system 10 in which data of objects are managed by using a hierarchical data structure, an object group may be composed of one or plural objects in the same level. In object operation system 10 in which objects are associated with operators, an object group may be composed of one or plural objects associated with the same operator. The area of an object group may be only an area where objects are actually displayed on the screen or may be an area including the vicinity of the objects. In Example 2, it is assumed that the area of an object group is an area including the vicinity of the objects and the boundary of the area is displayed on the screen such that operators can recognize the boundary.

Hereinafter, description is given to an object operation control method using object operation system 10 of the present example. CPU 21 loads an object operation control program stored in ROM 22 or storage section 30 and executes the object operation control program, to cause the controller 20 to perform processing of the steps shown in the flowchart of FIG. 14. The following description is given under the assumption that plural objects are already displayed on display section 40 (the touch screen) in advance and plural arbitrary objects are registered as an object group in advance. Further, it is assumed that the predetermined number of touch points which is used as a criterion for determining an operation target by determining section 20a is an arbitrary integer which is three or more and not more than the number of all the touch points of an operator's touch gesture.

First, similarly to Example 1, controller 20 (determining section 20a) determines whether or not a touch gesture has been performed on the screen on the basis of signals output from imaging section 60 (S201). When determining that a touch gesture has been performed on the screen (YES of S201), controller 20 (determining section 20a) divides plural touch points into touch point groups each composed of a touch point or touch points located within a certain area on the screen (S202).

Next, controller 20 (determining section 20a) determines whether each touch point group is composed of three or more touch points (S203). If a touch point group is composed of three or more touch points, controller 20 (determining section 20a) determines whether or not a predetermined number of touch points among the touch points of the touch point group are located on one object (S204). If a predetermined number of touch points are located on one object, controller 20 (determining section 20a) determines that the object is an operation target and controller 20 (processing section 20b) operates the touched object in accordance with a change of the touch points in position (a change in position of at least one of the predetermined number of touch points) (S205).

On the other hand, if a predetermined number of touch points are not located on any of objects in the screen, controller 20 (determining section 20a) determines whether a predetermined number of touch points are located on the area of an object group (S206). If a predetermined number of touches are located on the area of an object group, controller 20 (determining section 20a) determines the object group as an operation target and controller 20 (processing section 20b) operates the object group in accordance with a change of the touch points in position (a change in position of at least one of the predetermined number of touch points) (S207). If a predetermined number of touches are not located on the area of an object group, controller 20 (determining section 20a) determines that the touch gesture has not been performed on the object group and controller 20 (processing section 20b) does not operate the object group (ignores the touch gesture).

If an object group is composed of one or two touch points in S203, controller 20 (determining section 20a) determines whether or not the one or two touch points are located on one object (S208). If the one or two touch points are located on one object, controller 20 (determining section 20a) determines the object as an operation target and controller 20 (processing section 20b) operates the touched object in accordance with a change of the one or two touch points in position (S209). On the other hand, if the one or two touch points are not located on any of objects in the screen, controller 20 (processing section 20b) does not operate any object (ignores the touch gesture).

In this control, while operating an object or an object group as an operation target, controller 20 (determining section 20a) makes an operation on an operation target including the object or the object group which is now operated (an object group including the object concerned or an upper-level object group including the object group as a lower-level object group) invalid, in other words, does not accept an operation performed on an operation target including the object target which is now operated. In response to recognizing a multi-touch operation performed on an operation target including the object or the object group which is now operated, controller 20 (determining section 20a) may issue a warning that the object or the object group is currently operated, or may skip a process to determine the object or object group including the object or the object group which is now operated, an operation target.

Hereinafter, a concrete description is given to the operation of object operation system 10 when a multi-touch gesture is performed on the screen with reference to FIGs. 15A to 15F, FIGs. 16A to 16F, FIGs. 17A to 17F and FIG. 18A to 18H.

FIGs. 15A to 15F illustrate examples of the operation of object operation system 10, on receiving a dragging operation instructed by an operator's multi-touch gesture with a single hand, where all of the touch points of a touch gesture performed with five fingers of the operator's hand are assumed as a predetermined number of touch points to be used as a criterion for determining an operation target.

FIGs. 15A and 15B illustrate an example of a dragging operation performed by a touch gesture such that all of the touch points 73 of a touch point group (five touch points touched by an operator's right hand) is located on the area of object group 71 as illustrated in FIG. 15A and the touch points 73 are moved. Since a predetermined number of touch points are not located on any of objects 70 in the screen 72 and a predetermined number of touch points are located on the area of object group 71, the controller 20 (determining section 20a) determines the object group 71 as an operation target and the controller 20 (processing section 20b) moves the object group 71 in accordance with the moved distance of the touch points (process of S207 in FIG. 14), as illustrated in FIG. 15B.

FIGs. 15C and 15D illustrate another example of the dragging operation performed by a touch gesture such that all of the touch points 73 of a touch point group are located on the area of object group 71 and a part of the touch points are located on one of objects 70 in the object group 71 as illustrated in FIG. 15C. Since a predetermined number of touch points 73 are not located on any of objects 70 in the screen 72 and a predetermined number of touch points 73 are located on the area of the object group 71, the controller 20 (determining section 20a) determines the object group 71 as an operation target similarly to the above example and the controller 20 (processing section 20b) moves the object group 71 in accordance with the moved distance of the touch points (process of S207 in FIG. 14), as illustrated in FIG. 15D.

FIGs. 15E and 15F illustrate another example of the dragging operation performed by a touch gesture such that all of the touch points 73 of a touch point group are located on one of objects 70 in the object group 71 as illustrated in FIG. 15E and the touch points 73 are moved. Since a predetermined number of touch points 73 are located on one of objects 70 in the object group 71, the controller 20 (determining section 20a) determines the object 70 as an operation target and the controller 20 (processing section 20b) moves the object 70 in accordance with the moved distance of the touch points (process of S205 in FIG. 14), as illustrated in FIG. 15F. This operation makes the distance between objects 70 in the object groups 71 large, and therefore, increases the size of the area of the object group 71.

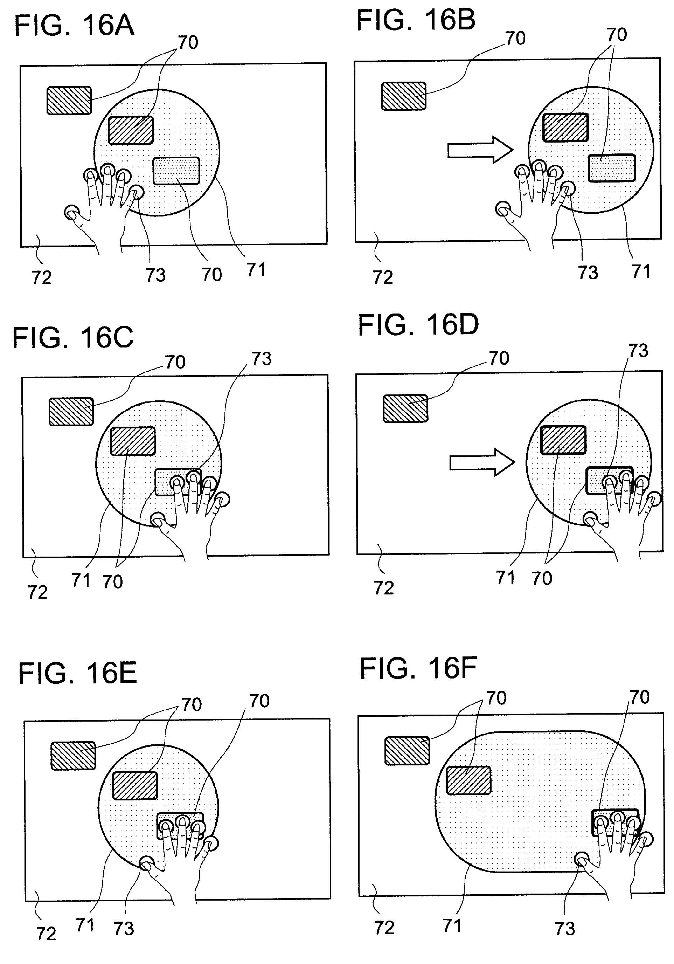

FIGs. 16A to 16F illustrate another set of examples of the operation of object operation system 10, on receiving a dragging operation instructed by an operator's multi-touch gesture with a single hand, where three touch points, which are more than half of five touch points of a touch gesture performed with five fingers of the operator's hand, are assumed as a predetermined number of touch points for use in the process to determine an operation target.

FIGs. 16A and 16B illustrate an example of a dragging operation performed by a touch gesture such that three of touch points 73 of a touch point group (five touch points touched by an operator's right hand) are located on the area of object group 71 as illustrated in FIG. 16A and the touch points 73 are moved. Since a predetermined number of touch points are not located on any of objects 70 in the screen 72 and a predetermined number of touch points are located on the area of object group 71, the controller 20 (determining section 20a) determines the object group 71 as an operation target and the controller 20 (processing section 20b) moves the object group 71 in accordance with the moved distance of the touch points (process of S207 in FIG. 14), as illustrated in FIG. 16B.

FIGs. 16C and 16D illustrate another example of a dragging operation performed by a touch gesture such that four of the touch points 73 of the touch point group are located on the area of object group 71 and two touch points 73 are located on one of objects 70 in the object group 71 as illustrated in FIG. 16C and the touch points 73 are moved. Since a predetermined number of touch points 73 are not located on any of objects 70 in the screen 72 and a predetermined number of touch points are located on object group 71, the controller 20 (determining section 20a) determines the object group 71 as an operation target similarly to the above and the controller 20 (processing section 20b) moves the object group 71 in accordance with the moved distance of the touch points (process of S207 in FIG. 14), as illustrated in FIG. 16D.

FIGs. 16E and 16F illustrate another example of a dragging operation performed by a touch gesture such that four of the touch points 73 of the touch point group are located on the area of object group 71 and three touch points 73 are located on one of objects 70 in the object group 71 as illustrated in FIG. 16E and the touch points 73 are moved. Since a predetermined number of touch points are located on the area of the object group 71 and a predetermined number of touch points are located on one of objects 70 in the object group 71, the controller 20 (determining section 20a) determines the touched object 70 as an operation target and the controller 20 (processing section 20b) moves the touched object 70 in accordance with the moved distance of the touch points (process of S205 in FIG. 14), as illustrated in FIG. 16F.

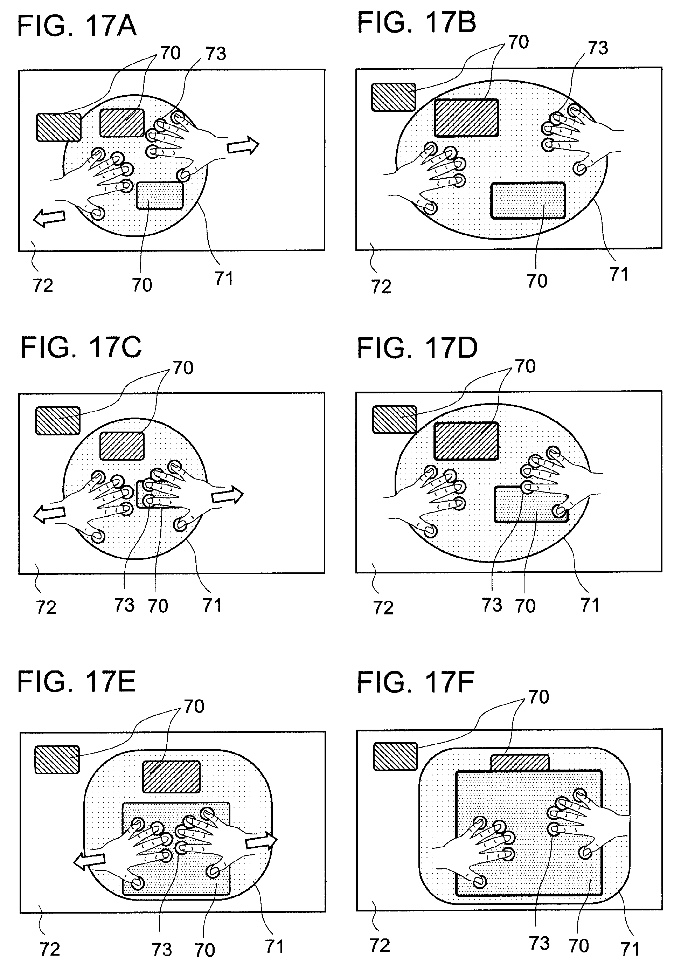

FIGs. 17A to 17F illustrate another set of examples of the operation of object operation system 10, on receiving a resizing operation instructed by an operator's multi-touch gesture with both hands, where all of ten touch points of a touch gesture performed with ten fingers of the operator's hands, are assumed as a predetermined number of touch points to be used as a criterion for determining an operation target.

FIGs. 17A and 17B illustrate an example of a resizing operation performed by a touch gesture such that all of the touch points 73 of a touch point group (ten touch points touched by operator's both hands) is located on the area of object group 71 and a pinch in/out operation is performed so as to change the distance between touch points 73 of one hand and touch points 73 of the other hand, as illustrated in FIG. 17A. In this and the following examples, descriptions is given to the case of a pinch-out operation. Since a predetermined number of touch points are not located on any of objects 70 in the screen 72 and a predetermined number of touch points are located on the area of object group 71, the controller 20 (determining section 20a) determines the object group 71 as an operation target and the controller 20 (processing section 20b) resizes (in this and the following examples, enlarges) the object group 71 in accordance with a change of the distance of the touch points (process of S207 in FIG. 14), as illustrated in FIG. 17B.

FIGs. 17C and 17D illustrate another example of a resizing operation performed by a touch gesture such that all of the touch points 73 of the touch point group are located on the area of object group 71, two of the touch points 73 of the touch point group are located on one of objects 70 and the distance between touch points 73 of one hand and touch points 73 of the other hand is changed, as illustrated in FIG. 17C. Since a predetermined number of touch points 73 are not located on any of objects 70 in the screen 72 and a predetermined number of touch points are located on the area of object group 71, the controller 20 (determining section 20a) determines the object group 71 as an operation target similarly to the above, and the controller 20 (processing section 20b) resizes the object group 71 in accordance with a change of the distance of the touch points (process of S207 in FIG. 14), as illustrated in FIG. 17D.

FIGs. 17E and 17F illustrate another example of a resizing operation performed by a touch gesture such that all of the touch points 73 of the touch point group are located on one of objects 70 in object group 71 and the distance between touch points 73 of one hand and touch points 73 of the other hand is changed, as illustrated in FIG. 17E. Since a predetermined number of touch points are located on the area of object group 71 and a predetermined number of touch points 73 are located on one of the objects 70, the controller 20 (determining section 20a) determines the touched object 70 as an operation target and the controller 20 (processing section 20b) resizes the touched object 70 in accordance with a change of the distance of the touch points (process of S205 in FIG. 14), as illustrated in FIG. 17F.

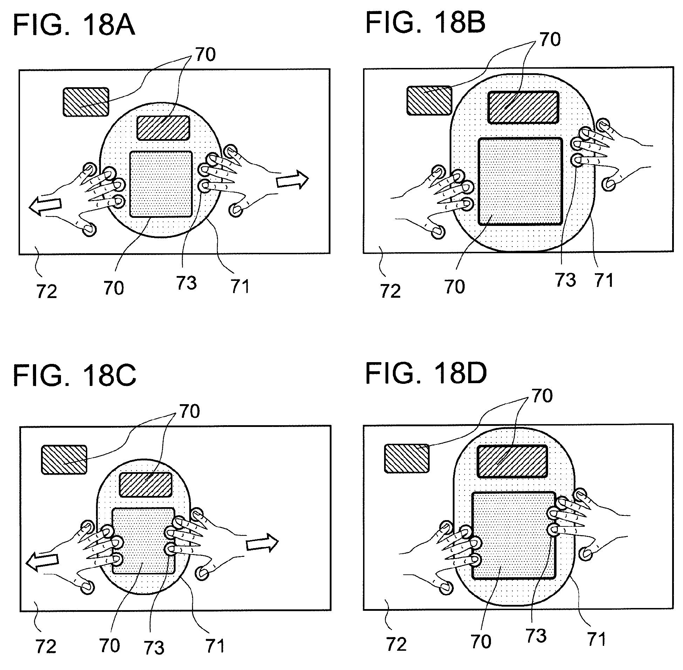

FIGs. 18A to 18H illustrate another set of examples of the operation of object operation system 10, on receiving a resizing operation instructed by an operator's multi-touch gesture with both hands, where six touch points, which are more than half of ten touch points of a touch gesture performed with ten fingers of the operator's hands are assumed as a predetermined number of touch points for use in the process to determine an operation target.

FIGs. 18A and 18B illustrate an example of a resizing operation performed by a touch gesture such that six of touch points 73 of a touch point group (ten touch points touched by operator's hands) is located on the area of object group 71 and the distance between touch points 73 of one hand and touch points 73 of the other hand is changed, as illustrated in FIG. 18A. Since a predetermined number of touch points are not located on any of objects 70 in the screen 72 and a predetermined number of touch points are located on the area of object group 71, the controller 20 (determining section 20a) determines the object group 71 as an operation target and the controller 20 (processing section 20b) resizes the object group 71 in accordance with a change of the distance of the touch points (process of S207 in FIG. 14), as illustrated in FIG. 14B.

FIGs. 18C and 18D illustrate another example of a resizing operation performed by a touch gesture such that six of the touch points 73 of the touch point group are located on the area of object group 71, four of the touch points 73 of the touch point group are located on one of objects 70 and the distance between touch points 73 of one hand and touch points 73 of the other hand is changed, as illustrated in FIG. 18C. Since a predetermined number of touch points 73 are not located on any of objects 70 in the screen 72 and a predetermined number of touch points are located on the area of object group 71, the controller 20 (determining section 20a) determines the object group 71 as an operation target and the controller 20 (processing section 20b) resizes the object group 71 in accordance with a change of the distance of the touch points (process of S207 in FIG. 14), as illustrated in FIG. 18D.

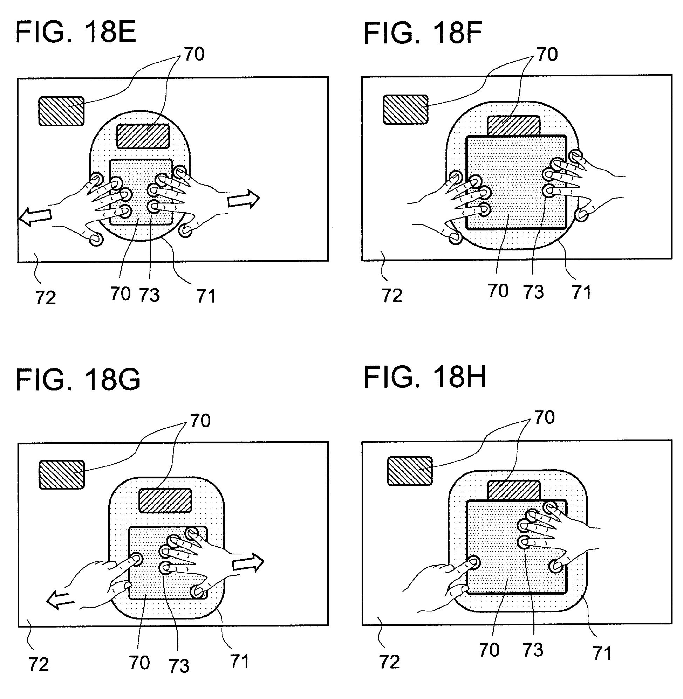

FIGs. 18E and 18F illustrate another example of a resizing operation performed by a touch gesture such that eight of the touch points 73 of the touch point group are located on the area of object group 71, six of the touch points 73 of the touch point group are located on one of objects 70 and the distance between touch points 73 of one hand and touch points 73 of the other hand is changed, as illustrated in FIG. 18E. Since a predetermined number of touch points 73 are located on the one of objects 70 and a predetermined number of touch points are located on the area of object group 71, the controller 20 (determining section 20a) determines the touched object 70 as an operation target and the controller 20 (processing section 20b) resizes the touched object 70 in accordance with a change of the distance of the touch points (process of S205 in FIG. 14), as illustrated in FIG. 18E.

Also in the case that a multi-touch gesture is performed with both hands in Example 2, each of the hands does not need to touch the screen 72 at multiple points. For example, the controller 20 may accept the following multi-touch gesture. FIGs. 18G and 18H illustrate a pinch-out operation performed by a touch gesture such that five touch points 73 touched with the right hand and one touch point 73 touched with the left hand are located on one of objects 70 and the distance between touch point 73 of the left hand and touch points 73 of the right hand is changed, as illustrated in FIG. 18E. Since a predetermined number of touch points are located on one of objects 70, the controller 20 (determining section 20a) determines the touched object 70 as an operation target and the controller 20 (processing section 20b) resizes the touched object 70 in accordance with a change of the distance of the touch points (process of S205 in FIG. 14), as illustrated in FIG. 18H.

In the cases of performing a multi-touch gesture with both hands in above examples, each of the hands is moved to change the positions of the touch points. Alternatively, the controller 20 may accept a gesture to fix a touch point or touch points touched with one hand and change in position a touch point or touch points touched with the other hand so as to change the positions of the touch points.

Further, in the above examples, the number of touch points used as a criterion for determining an operation target was three for a multi-touch gesture with a single hand, and was six for a multi-touch gesture with both hands. However, the number of touch points used as a criterion for determining an operation target should not be limited to these numbers and may be other appropriate numbers.

Further, in the above examples, controller 20 (determining section 20a) determines an object or an object group as an operation target when a touch gesture is performed with three or more fingers or an touch point group is composed of three or more touch points, and determines an object as an operation target when a touch gesture is performed with one or two fingers or an touch point group is composed of one or two points. The controller 20 conducts such control in order to support a dragging operation instructed by a touch gesture with one finger and a pinch in/out operation instructed by a touch gesture with two fingers, and the number of fingers (touch points) to be used as a criterion for determining an operation target is not limited to those in the above descriptions.

In the above examples, controller 20 (determining section 20a) determines the kind of operation to be performed on an operation target in accordance with a change in position of touch points of a multi-touch gesture. Alternatively, controller 20 (determining section 20a) may determine a kind of operation to be performed on an operation target in accordance with the number of touch points of a touch gesture. For example, controller 20 (determining section 20a) may determine the kind of operation as an operation to move an object or an object group if recognizing a multi-touch gesture with a single hand and may determine the kind of operation as an operation to resize an object or an object group if recognizing a multi-touch gesture with both hands. Alternatively, controller 20 (determining section 20a) may determine the kind of operation to be performed on an operation target in accordance with the number of touch points located on the touched object or the area of object group.

As described above, in response to recognizing a multi-touch gesture to touch the screen at three or more touch points simultaneously, the controller determines an operation target (one object or an object group) in accordance with whether or not a predetermined number of touch points among touch points of the multi-touch gesture are located on one of one object and the area of an object group. With this control, the object operation system can operate objects appropriately and can provide user-friendly operability.

### EXAMPLE 3

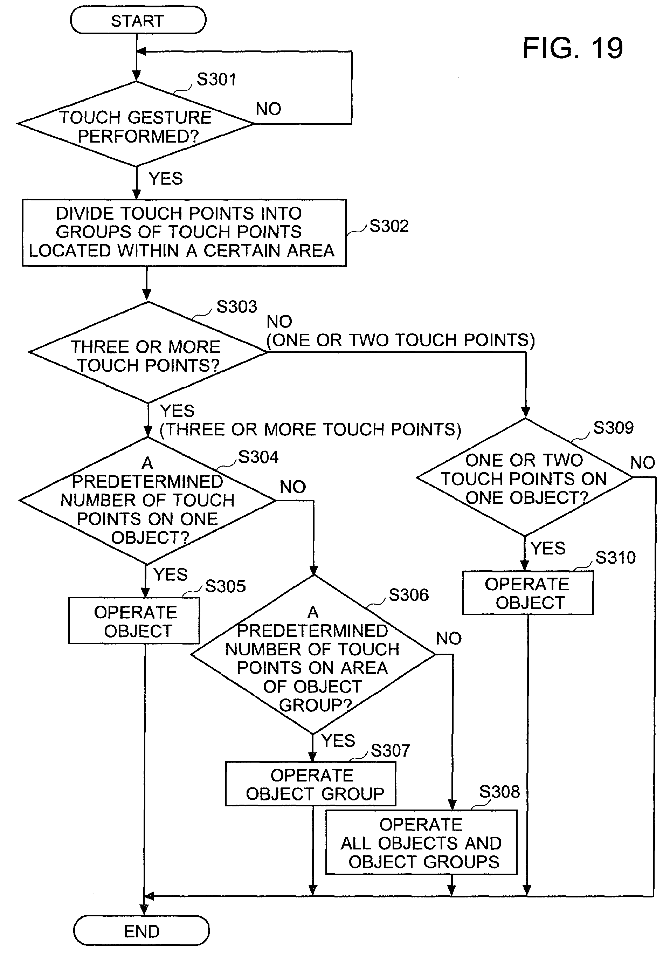

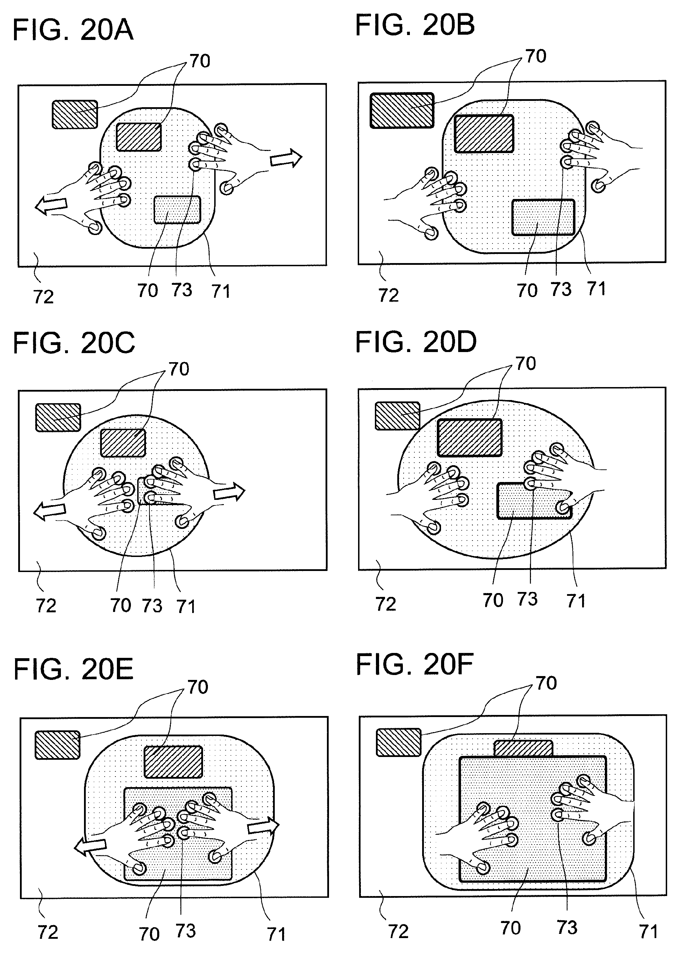

An illustrative object operation system, object operation control program, and object operation control method of Example 3 will be described with reference to FIGs. 19 to 20F so as to describe the above-described embodiments in detail. FIG. 19 is a flowchart illustrating the operation of the object operation system of the present example. FIGs. 20A to 20F are diagrams for illustrating examples of an object operation instructed by a multi-touch gesture in Example 3.

In Example 1 and Example 2, descriptions were given to an object operation system in which a controller decides between one object on the screen and all the objects on the screen, as an operation target, and an object operation system in which a controller decides between one object on the screen and an object group on the screen, as an operation target, respectively. Alternatively, an object operation system may perform the control in which the above two kinds of control are combined. In Example 3, descriptions were given to an object operation system supporting such control.

Hereinafter, description is given to an object operation control method of Example 3. CPU 21 loads an object operation control program stored in ROM 22 or storage section 30 and executes the object operation control program, to cause the controller 20 to perform processing of the steps shown in the flowchart of FIG. 19. The following description is given under the assumption that plural objects are already displayed on display section 40 (the touch screen) in advance and plural arbitrary objects are registered as an object group in advance. Further, it is assumed that the predetermined number of touch points which is used as a criterion for determining an operation target by determining section 20a is an arbitrary integer which is three or more and not more than the number of all the touch points of an operator's touch gesture.

First, similarly to Example 2, controller 20 (determining section 20a) determines whether a touch gesture has been performed on the screen on the basis of signals output from imaging section 60 (S301). When determining that a touch gesture has been performed on the screen (YES of S301), controller 20 (determining section 20a) divides plural touch points into touch point groups each composed of a touch point or touch points located within a certain area on the screen (S302).

Next, controller 20 (determining section 20a) determines whether each touch point group is composed of three or more touch points (S303). If a touch point group is composed of three or more touch points, controller 20 (determining section 20a) determines whether a predetermined number of touch points among the touch points of the touch point group are located on one object (S304). If a predetermined number of touch points are located on one object, controller 20 (determining section 20a) determines that the object is an operation target and controller 20 (processing section 20b) operates the touched object in accordance with a change of the touch points in position (a change in position of at least one of the predetermined number of touch points) (S305).

On the other hand, if a predetermined number of touch points are not located on any of objects in the screen, controller 20 (determining section 20a) determines whether a predetermined number of touch points are located on the area of an object group (S306). If a predetermined number of touches are located on the area of an object group, controller 20 (determining section 20a) determines the object group as an operation target and controller 20 (processing section 20b) operates the object group in accordance with a change of the touch points in position (a change in position of at least one of the predetermined number of touch points) (S307).

If a predetermined number of touches are not located on the area of an object group, controller 20 (processing section 20b) operates all of the objects and object croups on the screen in accordance with a change of the touch points in position (S308).

If an object group is composed of one or two touch points in S303, controller 20 (determining section 20a) determines whether the one or two touch points are located on one object (S309). If the one or two touch points are located on one object, controller 20 (determining section 20a) determines the object as an operation target and controller 20 (processing section 20b) operates the touched object in accordance with a change of the one or two touch points in position (S310). On the other hand, if the one or two touch points are not located on any of objects in the screen, controller 20 (processing section 20b) does not operate any object (ignores the touch gesture).

Hereinafter, a concrete description is given to the operation of object operation system 10 when a multi-touch gesture is performed on the screen with reference to FIGs. 20A to 20F.

FIGs. 20A to 20F illustrate examples of the operation of object operation system 10, on receiving a resizing operation instructed by an operator's multi-touch gesture with both hands, where all of the ten touch points of a touch gesture performed with ten fingers of the operator's hands, are assumed as a predetermined number of touch points to be used as a criterion for determining an operation target.

FIGs. 20A and 20B illustrate an example of a resizing operation performed by a touch gesture such that six of the touch points 73 of a touch point group (ten touch points touched by operator's both hands) are located on the area of object group 71 and a pinch in/out operation is performed so as to change the distance between touch points 73 of one hand and touch points 73 of the other hand, as illustrated in FIG. 20A. In this and the following examples, descriptions is given to the case of a pinch-out operation. Since a predetermined number of touch points are not located on the area of object group 71 and a predetermined number of touch points are not located on any of objects 70 in the screen 72, the controller 20 (determining section 20a) determines all of the objects 70 and the object group 71 in the screen 72 as operation targets and the controller 20 (processing section 20b) resizes (in this and the following examples, enlarges) all of the objects 70 and the object group 71 in the screen 72 in accordance with a change of the distance of the touch points (process of S308 in FIG. 19), as illustrated in FIG. 20B.

FIGs. 20C and 20D illustrate another example of a resizing operation performed by a touch gesture such that all of the touch points 73 of the touch point group are located on the area of object group 71, two of the touch points 73 of the touch point group are located on one of objects 70 and the distance between touch points 73 of one hand and touch points 73 of the other hand is changed, as illustrated in FIG. 20C. Since a predetermined number of touch points 73 are not located on any of objects 70 in the screen 72 but a predetermined number of touch points are located on the area of object group 71, the controller 20 (determining section 20a) determines the object group 71 as an operation target, and the controller 20 (processing section 20b) resizes the object group 71 in accordance with a change of the distance of the touch points (process of S307 in FIG. 19), as illustrated in FIG. 20D.

FIGs. 20E and 20F illustrate another example of a resizing operation performed by a touch gesture such that all of the touch points 73 of the touch point group are located on one of objects 70 in object group 71 and the distance between touch points 73 of one hand and touch points 73 of the other hand is changed, as illustrated in FIG. 20E. Since a predetermined number of touch points are located on the area of object group 71 and a predetermined number of touch points 73 are located on one of the objects 70, the controller 20 (determining section 20a) determines the touched object 70 as an operation target and the controller 20 (processing section 20b) resizes the touched object 70 in accordance with a change of the distance of the touch points (process of S305 in FIG. 19), as illustrated in FIG. 20D.

As described above, in response to recognizing a multi-touch gesture to touch the screen at three or more touch points simultaneously, the controller determines an operation target (one object or an object group) in accordance with whether or not a predetermined number of touch points among touch points of the multi-touch gesture are located on one object or the area of an object group, and if a predetermined number of touch points are located on neither of one object and the area of an object group, the controller determines all of the objects and the object groups on the screen as operation targets. With this control, the object operation system can operate objects more appropriately and can provide more user-friendly operability.

Incidentally, the present invention should not be limited to the above-mentioned embodiments and examples and unless deviating from the intention of the present invention, the constitution of the object operation system and the object operation control method may be changed appropriately.

For example, in the above-described examples, the object operation system performs a dragging operation and a resizing operation as examples of possible operations to be performed on an object or an object group. However, arbitrary operations which can be performed on an object or an object group may be employed in the system.

Further, in the above-described examples, descriptions were given under the assumption that the object operation system includes a common display on which plural users can operate objects simultaneously. However, an object operation system as an embodiment of the present invention can be arbitral computing device as far as it includes a touch screen composed of a display section and an operation section. For example, the present invention is applicable to various devices including personal computers equipped with a touch screen, tablet terminals and mobile terminals like smartphones.

The present invention is applicable to a system which allows an operator or operators to operate objects, such as text, shapes and images, particularly to a system which allows plural operators to perform coordinated operation. The present invention is further applicable to an operation control program to cause the system to control the object operation when being executed in the system, a non-transitory computer-readable storage medium storing the object operation control program, and an object operation control method to control the object operation of the system.

Although embodiments and examples of the present invention has been described and illustrated in detail, it is clearly understood that the same is by way of illustrated and example only and is not to be taken by way of limitation, the scope of the present invention being interpreted by terms of the appended claims.

## Claims

1. An object operation system (10) comprising:
a display section (40) which includes a screen (72) and displays an object or objects on the screen (72);
an operation section (50) which receives a touch gesture performed by an operator on the screen (72) and outputs information according to the touch gesture; and
a controller (20) which controls the display section (40) and the operation section (50),
the object operation system (10) **characterized in that** the controller (20),
in response to recognizing a multi-touch gesture to touch the screen (72) at three or more touch points simultaneously on a basis of the information output from the operation section (50), determines an operation target of the multi-touch gesture in accordance with whether or not a predetermined number of touch points among the three or more of touch points are located on one object displayed on the screen (72) or an area of an object group composed of objects displayed on the screen (72), where the predetermined number is two or more, and
in response to a change in position of at least one of the predetermined number of touch points, operates the operation target in accordance with the change.

2. The object operation system (10) of claim 1,
wherein, on determining the operation target, the controller (20) determines a kind of operation to be performed on the operation target in accordance with the number of touch points located on the one object or the area of the object group.

3. The object operation system (10) of claim 1 or 2,
wherein, in response to determining that the predetermined number of touch points are located on the one object or the area of the object group, the controller (20) determines the one object or the object group as an operation target of the multi-touch gesture.

4. The object operation system (10) of claim 3,
wherein, in response to determining that the predetermined number of touch points are located on one object in the object group, the controller (20) determines the one object in the object group as an operation target of the multi-touch gesture.

5. The object operation system of claim 3 or 4,
wherein, in response to determining that the predetermined number of touch points are located on neither of one object displayed on the screen (72) and an area of an object group composed of objects displayed on the screen (72), the controller determines all objects displayed on the screen (72) as operation targets.

6. The object operation system (10) of any one of claims 1 to 5,
wherein, while operating the one object or the object group determined as an operation target, the controller (20) makes an operation to be performed on an operation target including the one object or the object group invalid.

7. An object operation control program to be executed in a controller (20) which controls a touch screen including a display section (40) and an operation section (50), the display section (40) displaying an object or objects on a screen (72) thereof, the operation section (50) receiving a touch gesture performed by an operator on the screen (72) and outputting information according to the touch gesture, the object operation control program **characterized by**, when being executed by a processor (21) of the controller (20), causing the controller (20) to perform processing comprising:
in response to recognizing a multi-touch gesture to touch the screen (72) at three or more touch points simultaneously on a basis of the information output from the operation section (50), determining an operation target of the multi-touch gesture in accordance with whether or not a predetermined number of touch points among the three or more of touch points are located on one object displayed on the screen (72) or an area of an object group composed of objects displayed on the screen (72), where the predetermined number is two or more; and
in response to a change in position of at least one of the predetermined number of touch points, operating the operation target in accordance with the change.

8. The object operation control program of claim 7,
wherein the determining the operation target includes determining a kind of operation to be performed on the operation target in accordance with the number of touch points located on the one object or the area of the object group.

9. The object operation control program of claim 7 or 8,
wherein the determining the operation target includes, in response to determining that the predetermined number of touch points are located on the one object or the area of the object group, determining the one object or the object group as an operation target of the multi-touch gesture.

10. The object operation control program of claim 9,
wherein the determining the operation target includes, in response to determining that the predetermined number of touch points are located on one object in the object group, determining the one object in the object group as an operation target of the multi-touch gesture.

11. The object operation control program of claim 9 or 10,
wherein the determining the operation target includes, in response to determining that the predetermined number of touch points are located on neither of one object displayed on the screen (72) and an area of an object group composed of objects displayed on the screen (72), determining all objects displayed on the screen as operation targets.

12. The object operation control program of claim any one of claims 7 to 11,
wherein the predetermined number is the number of all of the three or more touch points of the multi-touch gesture, or more than half of the number of all of the three or more touch points.

13. The object operation control program of any one of claims 7 to 12,
wherein the determining the operation target includes,
forming a touch point group or touch point groups each composed of one or more touch points located within a certain area on the screen (72), and
in response to recognizing a touch point group or touch point groups each composed of three or more touch points, determining an operation target of each of the touch point group or touch point groups in accordance with whether or not a predetermined number of touch points among the three or more of touch points are located on one object displayed on the screen (72) or an area of an object group composed of objects displayed on the screen (72).

14. The object operation control program of any one of claims 7 to 13,
wherein the operating the operation target includes, while operating the one object or the object group determined as an operation target, making an operation to be performed on an operation target including the one object or the object group invalid.

15. An object operation control method for use in a system (10) including a display section (40), an operation section (50) and a controller (20) which controls the display section (40) and the operation section (50), the display section (40) displaying an object or objects on a screen (72) thereof, the operation section (50) receiving a touch gesture performed by an operator on the screen (72) and outputting information according to the touch gesture, the method **characterized by** comprising:
in response to recognizing a multi-touch gesture to touch the screen (72) at three or more touch points simultaneously on a basis of the information output from the operation section (50), determining an operation target of the multi-touch gesture in accordance with whether or not a predetermined number of touch points among the three or more of touch points are located on one object displayed on the screen (72) or an area of an object group composed of objects displayed on the screen (72), where the predetermined number is two or more; and
in response to a change in position of at least one of the predetermined number of touch points, operating the operation target in accordance with the change.
